# FASCICULE DE BREVET EUROPEEN

(11) **EP 1 557 808 B1**
(45) Date de publication et mention de la délivrance du brevet: **28.03.2007**
(21) Numéro de dépôt: 04425911.7
(22) Date de dépôt: 03.12.2004
(51) Int. Cl.: G09B 17/00

(54) **Pupitre éléctrique avec lecteur inter-actif**
Elektrischer Arbeiter mit wechselwirkendem Laserlaser
Electric bookrest with interactive laser reader

(30) Priorité: 13.01.2004 IT NA20040004
(43) Date de publication de la demande: 27.07.2005
(73) Titulaire: Carrella, Domenico, Napoli (IT)
(72) Inventeur: Carrella, Domenico, Napoli (IT)

(56) Documents cités:
- DE-U1- 9 114 208
- US-A- 2 782 528
- US-A- 4 385 461
- US-A- 5 213 508
- US-B1- 6 832 915

## Description

Le champ de la technique à lequel l'invention se réfère,
est le champ mécanique et électronique.

L'invention concerne un appareil électrique, pupitre électrique pour la lecture qui actionne en automatique, semi-automatique ou manuel, un dispositif mécanique représenté de:
a) **un plan incliné mobile** qu'il se déplace en sens vertical en même temps à
b) un rayon laser lumineux qu'il coule sous forme de plm (point lumineux mobile) sur la ligne de la **figure antérieure du document** ou livre, placé sur le mécanisme en mouvement, pendant qu'il vient lu.

### État de la technique pertinent à l'invention attestée par les documents.

Les dispositions techniques et mécaniques du pupitre électrique pour la lecture sur cité, elles sont innovantes, mélioratives au regard de celles des autres pupitres existants, comme attesté par les documents suivants, sous cités.

Ces documents constituent la technique antérieure considérée comme étant la prochaine à l'objet que j'ai inventé avec la quelle une comparaison fonctionnelle c'est possible ;
D1: US-A-5 213 508
D1: US-À-4 385 461
D3: US - À-2 782 528
D4: US - B1 - 6 832 915
D5: DE 91 14 208 U1

La technique antérieure, la plus proche et objective à la technique du pupitre électrique pour la lecture, que j'ai proposée, elle se trouve dans le document D1 avec lequel qui on peut faire une comparaison.

Le document D1 révèle un dispositif d'aide à la lecture sous forme d'un pupitre électrique pour la lecture qui comprend:
(a) un cadre extérieur fixe;
(b) **un plan incliné immobile** destiné à supporter un document avant d'être lu,
(c) une source de lumière destinée à projeter un point lumineux mobile sur la **figure postérieure du document** de lecture transparente (brillant) cette source de lumière q'elle est: (c1) munie de moyens qu'ils permettent de déplacer la projection du point lumineux mobile perpendiculaire et parallèle au plan incliné
   (c2) contenue dans le cadre extérieur;
(d) un tableau de commande électrique qui comprend un contrôleur à logique programmable et un clavier muni de touches et d'interrupteurs destinés à contrôler les mouvements du point lumineux mobile en manière que le point lumineux mobile suive les lignes du texte à lire séquentiellement.

Les caractéristiques mécaniques et fonctionnelles du pupitre électrique pour la lecture qui ont êtes proposées par le soussigné (dans l'alinéa de la page 1), aux points, (a) et, (b) elles constituent des différences essentielles et innovantes au regard des points, (b) et (c) sur soulignés, du rapport D1.

### Le problème technique résolu par l'invention

Le pupitre électrique présent, se propose de résoudre problèmes techniques liés au système de lecture traditionnelle des livres ou documents, en améliorant, au regard des autres types de pupitres, la lecture. Le pupitre électrique proposé pour la lecture, en effet, il évite au lecteur certains inconvénients physiciens et psychiques qui, par contre, ils sont présentés par tous les autres types de pupitres.
a) Le lecteur, grâce au mouvement vertical haut bas et vice versa du plan incliné mobile, qu'il soulève le livre avec différentes vitesses programmables, en syntonie avec le mouvement horizontal et perpendiculaire du plm ((point lumineux mobile) sur les pages de lecture, il peut lire le document, posé sur l'appareil en maintenant de manière fixe et ininterrompue, le regard toujours à la même hauteur de lecture du livre. De cette manière il évite, pendant la lecture, le stress physique causé par les micro déplacements oculaires continus en direction haut bas et vice versa de la lecture traditionnelle qui, par contre, se relève, n'importe quel autre type de pupitre existant. Actuellement la résolution du problème **de l'élimination du mouvement haut-bas du regard et en conséquence du cou et de la tête, elle permet de diminuer la fatigue physique pendant la lecture.**
b) En suivant, pendant la lecture, le parcours du plm **sur la surface antérieure des pages** et pas sur la postérieure, comme proposé, par autres (voir document D1), il est possible de lire, avec la technique du pupitre que j'ai proposée, toutes les types de documents, feuilles, cahier ou livres que se trouvent sur le pupitre, sans être liés, par le plm ((point lumineux mobile) **à l'usage du matériel de lecture (par exemple des feuilles transparentes ou brillantes, posés sur le pupitre) même pas à l'immobilité ou statisme du document sur le pupitre.**
   En outre avec la technique du pim (plan incliné mobile) qui a été proposée, il est possible de lire le matériel de lecture (feuilles, cahiers ou livres), qu'il se déplace sur le pupitre, pendant que l'oeil, au contraire, il reste immobile, fixe, toujours à la même hauteur de lecture. **Donc, pendant la lecture avec ce nouveau méthode d'étude proposé, par le pupitre électrique avec lecteur interactif laser c'est le livre qui se déplace et pas l'oeil!!**
   L'oeil, donc, comme déjà sur précisé, en n'étant plus lié aux mouvements haut bas et vice versa, comme il arrive dans la lecture traditionnelle ou encore, selon les lois actuelles, il est en gré de résister, le plus, soit à la fatigue, soit qui au stress pendant la lecture et en plus, le lecteur il peut bénéficier d'une guide lumineuse qui peut aider beaucoup les personnes avec, ou sans problèmes de lecture.
c) Quoique des documents concernant les pupitres réglables en hauteur ils existent, (D5 par exemple) personne ne suggère pas de changer hauteur du document à lire pendant sa lecture. Le pupitre présent résout le problème technique susdit, comme il est doué d'un système automatique de régulation qu'il permet à l'opérateur de changer hauteur du document à lire pendant sa lecture.

### Exposition de l'invention

Le pupitre électrique pour la lecture est composé de:
a) un cadre extérieur fixe en forme inclinée semblable à la plus grande partie des autres pupitres préexistants;
b) un pim, (plan incliné mobile) dont sur la base réglable est mis le livre ou document de lecture, doué d'un mouvement vertical à la vitesse variable, réglable par l'opérateur, par l'intermédiaire des moyens du clavier ; la vitesse du pim (plan incliné mobile) peut être de type continu ou intermittent, soit pour la montée que pour la descente ;
c) d'un lecteur laser qui projette un rayon lumineux sous forme de plf point lumineux fixe qui se transforme en plm (point lumineux mobile) en se déplaçant de manière linéaire ou continue pendant la lecture, sur la surface antérieure du document de lecture, toujours cependant, en synchronie avec le mouvement vertical, montée et descente, du pim (plan incliné mobile) ; le plm (point lumineux mobile) se peut déplacer sur la ligne des colonnes du texte, soit en sens horizontal de gauche vers la droite et vice versa, soit en sens haut bas vertical et vice versa en rapport au mouvement du pim (plan incliné mobile) en servant au même temps de guide précieuse pour la lecture du livre. Le fonctionnement du plm (point lumineux mobile) avec ce du pim (plan incliné mobile) peut être programmé de manière automatique, semi-automatique ou manuelle et il est réglé avec des différents types de vitesse ;
d) un tableau de commande électrique avec un contrôleur à logique programmable qui contrôle les deux mécanismes de fonctionnement cités, et un clavier par lequel l'opérateur peut insérer ou changer, en base à ses exigences d'étude ou de lecture, les différents programmes de lecture dont l'appareil est doué;
e) moyens qui règlent en phase de plan initial le positionnement général, vertical, horizontal et numérique du livre à lire. C'est possible établir pour chaque livre le parcours du plm (point lumineux mobile) en base à:
   - l'hauteur de la colonne de lecture, c'est à dire en base au numéro de lignes de lecture présentes sur chaque page;
   - à la longueur horizontale effective de la ligne de la colonne de lecture de la page en objet;
   - au numéro de colonnes de lecture présentes sur chaque page de lecture ;
f) des moyens mécaniques que, sous forme de :
   - leviers élastiques ils permettent de bloquer le document ou livre de lecture sur la base réglable de l'étage incliné ;
   - moyens de vissage en degré de fixer la petite couverture du livre sur deux dossiers réglables, localisées sur le pim (plan incliné mobile) ;
   - deux hampes filiformes élastiques capables de maintenir arrêtées, et uniformes, sous d'elles, les pages du libro, pendant la lecture ;
   - deux dossiers, gauches et droits, qu'ils règlent de manière uniforme l'entretien ordonné des deux côtés gauches et droits du livre ouvert sur le pupitre, pendant la lecture, de manière que le plm (point lumineux mobile) puisse couler sur les pages sans interférences.

### Avantages apportés par l'invention

Les avantages apportés par l'invention aux gens, toutes, des enfants aux âgés qu'ils ont difficulté à lire et en particulaire manière à celles-là désavantagées avec des problèmes de lecture et apprentissage, ils sont différents, intéressants et évaluables suffisamment au niveau scientifique et pédagogique, en particulaire manière pour les sujets dyslexiques, qu'entre les causes de leur dérangement doit être attribué aussi une instabilité oculaire en suivant de manière correcte la ligne de lecture. Le pupitre électrique pour la lecture, grâce à le guide lumineuse représentée par le plm sur les lignes de lecture, il facilite la manière de lire, en rendant la lecture moins fatigante et épuisante aux gens ordinaires, mais surtout en la facilitant, aux dyslexiques. Avec le pupitre électrique on peuvent lire et étudier livres, textes, documents etc. dans le respect des rythmes naturels de lecture et d'apprentissage de chaque individu. Donc, il peut être utilisé par gens de chaque âge, et en particulaire manière par les étudiants de chaque ordre et degré, parce qu'entre les beaucoup d'avantages il stimule aussi l'exercice de la lecture et il en facilite l'apprentissage, le tout, préalable régulation et plan individuel de la vitesse de lecture réalisable avec un test personnalisé et monitorat sur le même appareil. Le champ d'application auquel cet appareil est destiné, c'est soit scolaire (écoles, laboratoires, bibliothèques, centres de lecture), mais aussi privé, (dans nos études ou dans les salons). Les bénéfices qui on peuvent obtenir, au niveau formatif et pédagogique, ils sont déjà évidents dans les premières phases d'utilisation de l'appareil, à faire abstraction, soit du degré d'instruction soit des capacités intellectuelles dont on est doué.

### Description des modalités de réalisation de l'invention, avec référence aux dessins

L'invention qui est décrite de suite ici, aux buts de sa réalisation, elle est exposée soit en sens littéraire pour passages, que technique schématique, avec l'aide des dessins et des signes relatifs de référence.

Les dessins suivants, qui j'énumérerai, ils feront, donc, de guide et de support à la description de l'invention.

### Liste des illustrations :

**illustration 1, exposition du pupitre électrique avec lecteur interactif laser :** avec la plus grande partie des éléments distinctifs extérieurs et constitutifs de l'appareil.
   Pour les restants ses éléments pas visibles, on renvoie aux illustrations restantes;
**illustration 2, exposition du cadre extérieur fixe de l'appareil ;**
**illustration 3, exposition du derrière de l'appareil;**
**illustration 4, exposition du positionnement vertical haut,** avec le plf (point lumineux fixe) ou rayon lumineux sur la Lcl (lettre commence ligne) de la ligne première de lecture de la page du livre;
**illustration 5, exposition du dessin schématique - planimétrique du mécanisme intérieur du positionnement vertical,** haut bas, du plm (point lumineux mobile) sur la page ;
**illustration 6, exposition du positionnement bas vertical** du plf (point lumineux fixe) sur la D1 (dernière ligne), de lecture de la page du livre;
**Illustration 7, exposition du plm laser;** à travers laquelle a lieu :
   a) le positionnement horizontal, gauche droit, du plm (point lumineux mobile) relatif à la longueur de la ligne de lecture sur laquelle doit couler le plm (point lumineux mobile) ;
   b) le plan colonnaire, c'est-à-dire, l'enregistrement du numéro de colonnes présentes sur la page;
**illustration 8, exposition du traîneau** extrapolé soit de l'étage incliné où elle est fixée, soit de l'appareil;
**illustration 9 exposition du p.i., (plan incliné),** extrapolé, soit du traîneau, où il est fixé par une patte de lapin de fixation, soit par des deux guides latéraux à "u", que de l'appareil;
**illustration 10, exposition du clavier;**
**illustration 11, exposition du pupitre électrique sans livre:**
**illustration 12 exposition du pupitre électrique avec le livre ouvert placé sur la base réglable de l'étage incliné, avec deux colonnes :**
   a) une colonne de lecture sur la page gauche ;
   b) une colonne de lecture sur la page droite;
**illustration 13, exposition du pupitre électrique avec le livre placé ouvert sur la base réglable de l'étage inclinée avec quatre colonnes:**
   a), deux colonnes de lecture sur la page gauche et (sx1, sx2),
   b), deux colonnes de lecture sur la page droite (dx1, dx2),
**illustration 14, exposition du pupitre électrique avec les dossiers fermés et avec le laser éteint ;**
**illustration 15 exposition du pupitre électrique avec un dossier ouvert et le laser allumé.**

### Description de l'invention avec référence aux dessins

L'illustration 1 représente la vision perspective du pupitre électrique pour la lecture avec la plus grande partie des éléments distinctifs extérieurs et constitutifs de l'appareil. Pour les restants des ses éléments pas visibles on renvoie aux illustrations restantes.

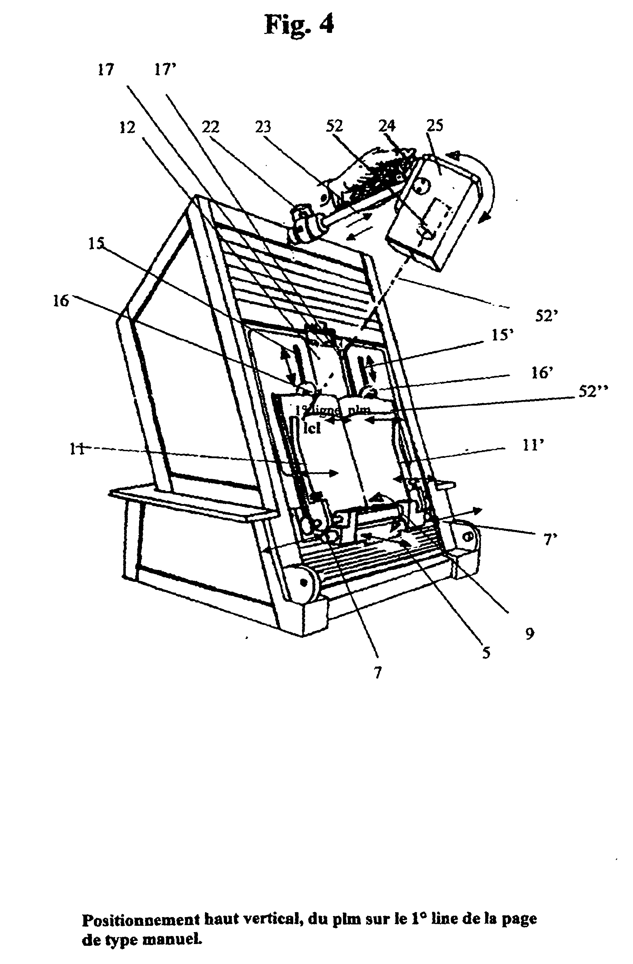

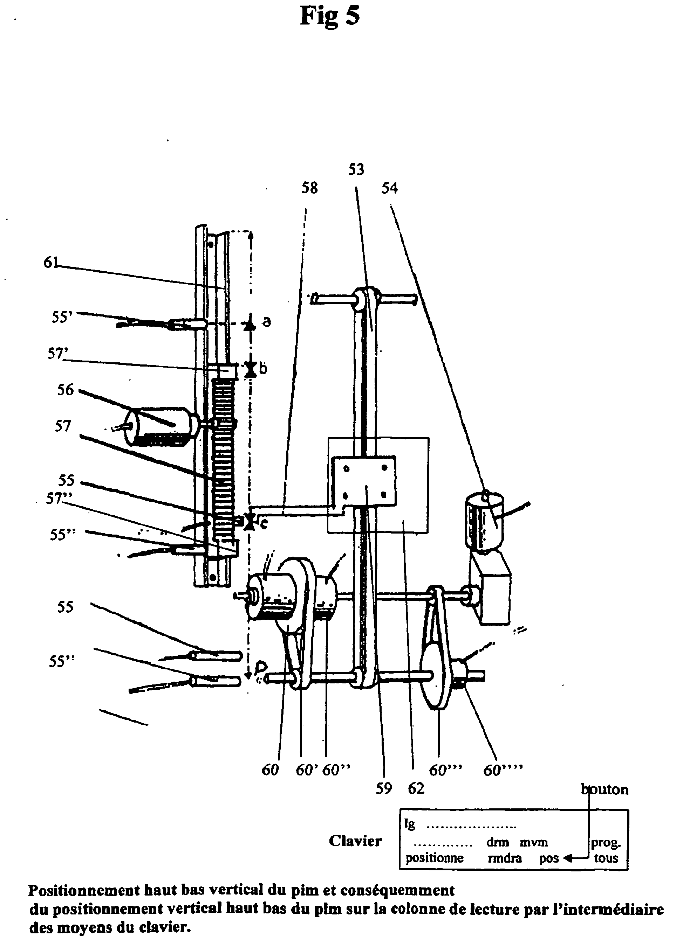

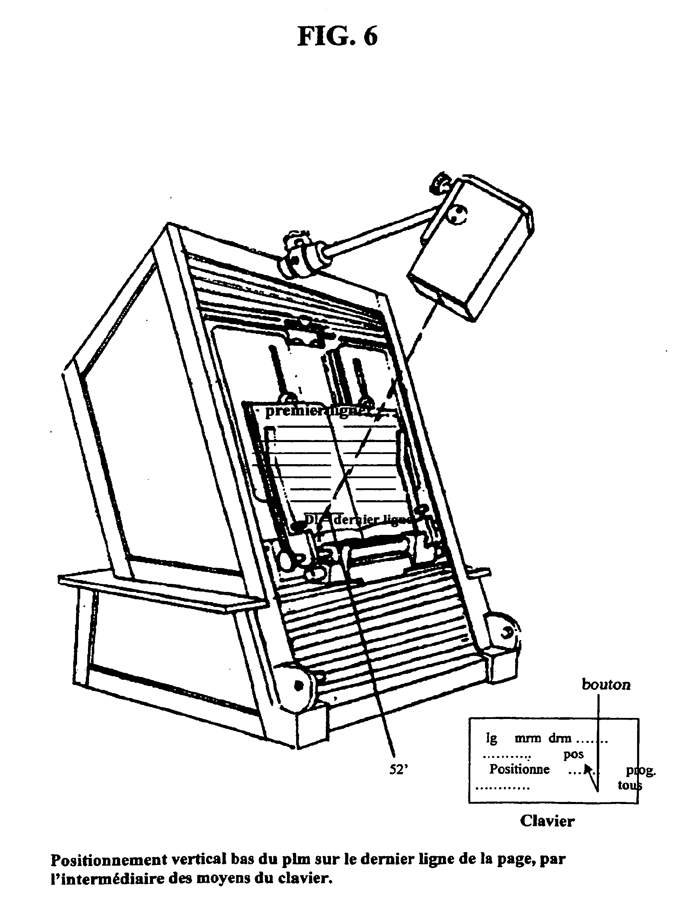

Le pupitre électrique pour la lecture est de forme inclinée, constitué par un cadre extérieur fixe d'aluminium, (illustration 2), et d'une partie intérieure mobile, constituée par deux guides latéraux 19, 19' à "U", (illustration 9), dans lesquelles coule le pim, (plan incliné mobile) 12 avec base d'appui réglable 5 de l'étage incliné, destiné à soutenir un livre ou document (fig. 4-12-13), par l'intermédiaire des moyens spéciaux de blocage.

Le pim (plan incliné mobile), 12, pendant son parcours vertical de montée et de descente à travers les deux guides latéraux, il est protégé dans la partie supérieure par un soufflet supérieur 2' et dans la partie inférieure par un soufflet inférieur 2.

Le pupitre électrique fonctionne au bas voltage en transformant le courant de réseau à 24 volts et il est doué de toutes les protections prévues pour le fonctionnement des moyens de soulèvement entre lesquelles des photocellules de sûreté, comme nous verrons pendant la description. Avant d'appuyer le livre sur la base réglable 5 de l'étage incliné, l'opérateur doit réaliser les opérations décrites aux points à, b, c, d, f, g.

### a) Régler la base d'appui du livre

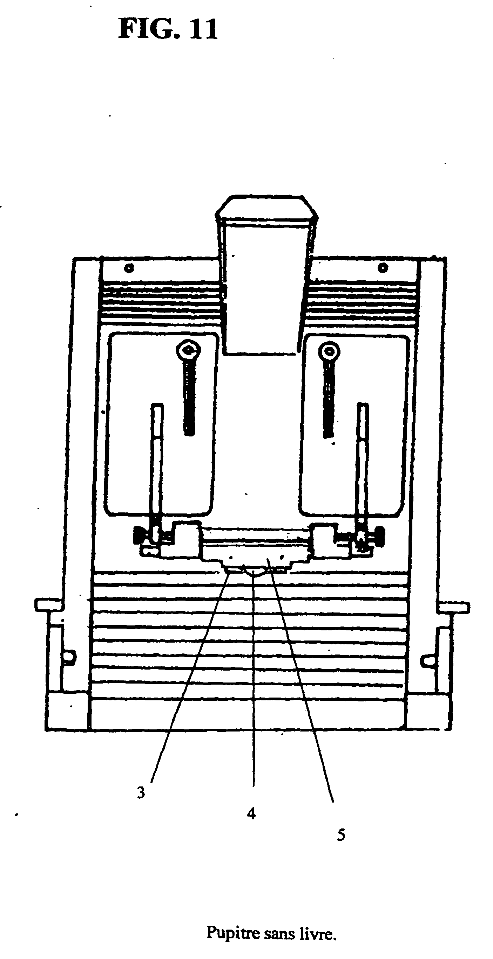

L'opérateur, en base à la grandeur du livre à contenir, il doit régler la surface de la base d'appui 5, (fig. 4), dans le sens de la flèche double, par un bouton 4 (fig.11) localisé sous la base même, protégé par un soufflet de base 3, (fig.11).

### b) Réaliser le mouvement rotatoire du levier tubulaire élastique.

L'opérateur fait tourner vers le bas, successivement, dans le sens de la flèche double, le levier boudin élastique 9, (fig. 4), en mettant le livre sur elle; après cette opération on relaxe le levier tubulaire élastique que se positionne sur le livre ;
ce levier tubulaire élastique 9 qui est baissée par l'opérateur pour mettre le livre sur la base susdite, localisée sur la base réglable 5, (fig.4), de l'étage incliné, il est fournie de mouvement rotatoire à la pression, dans le sens de la flèche double, dû à deux molles intérieurs au mécanisme de la base réglable 5 de l'étage incliné et réglées par deux gobelets 6, 6'. La rotation de ce levier tubulaire est dû aux deux cylindres hauts de forme intérieur, vissés aux deux côtés sx et dx de la base d'appui, où sont localisées aussi les deux ressorts. Les éléments de conjonction et, ensuite, de transmission du mouvement entre les deux gobelets creux 6, 6' et le levier tubulaire élastique 9 qu'ils permettent la rotation du mécanisme susdit, ils sont constitués par deux petits cubes de support 27, 27'.

### c) Régler l'écoulement en sens longitudinal des deux petits arbres, logés dans le levier tubulaire élastique.

Dans le levier tubulaire élastique 9 sont logés deux rond d'acier latéraux, droits et gauches, avec du noix passementée à leur extrémité 7, 7', (fig. 4) ; tels ronds d'acier 7, 7', sont doués de mouvement autonome réglable axialement à l'intérieur du levier tubulaire, d'où ils peuvent sortir vers l'extérieur en se raccourcissant ou en se allongeant pour à peu près de la moitié de leur longueur; au-delà du mouvement autonome axial, tels ronds d'acier suivent le mouvement rotatoire du levier tubulaire élastique quand elle se lève et se baisse, en formant avec elle, pour la présence de tampons axiales placés à l'intérieur du levier tubulaire, un corps unique, pendant la rotation.

### d) Régler le positionnement des deux hampes filiformes sur les ronds d'acier susdits.

Sur ces deux ronds d'acier latéraux gauches et droits 7, 7' ils sont localisées deux Hampes filiformes gauches et droites 11, 11', (fig. 4), douées de mouvement autonome soit semi rotatoire que longitudinal qu'ils en permettent la régulation à la distance sur tels axes. Après la régulation et leur fixation, par deux petits respectifs boutons vissage, sur les deux ronds d'acier, les hampes filiformes peuvent tourner avec le levier tubulaire élastique, solidairement 9 dans le sens de la flèche double. Ces deux hampes réglables par l'opérateur dans le déplacement longitudinalement sur les ronds d'acier susdits, elles sont protégées au bout de leur course par deux arrêts ou noix vissées aux bouts des deux ronds d'acier 7, 7' qu'ils en empêchent leur écoulement. Par contre, le glissement axial des rond d'acier susdits à l'intérieur du levier tubulaire, au-delà d'une mesure déterminée, il est protégé, du côté intérieur, au levier tubulaire, par des arrêtes qu'ils en empêchent le complet écoulement. La fonction de ces deux hampes réglables dans les différentes positions demandées, en base à la grandeur du livre, elle permette, pendant la lecture du livre, de fixer et de tenir arrêtées par l'intermédiaire d'une pression légère, sous d'elles, les deux côtés extrêmes, gauche et droit, des pages de lecture, comme il s'observe dans les différentes illustrations 4, 6, 7, 12, 13.

### e) Fixer, par vissage, les deux petites couvertures sur deux dossiers.

L'opérateur doit fixer, sur les deux dossiers réglables gauches et droite 13, 13', la partie supérieure des deux petites couvertures, gauche et droite du livre, par l'intermédiaire de deux boutons respectifs de vissage 16, 16'. Ces petits boutons glissent, dans le sens de la flèche double, à l'intérieur de deux boutonnières respectives 15, 15', fig. 4 tirées sur la surface des deux susdits dossiers gauche et droite 13, 13' ; le glissement de ces deux petits boutons dans les deux boutonnières respectives des dossiers droite et gauche, permet de régler le blocage des deux petites couvertures du livre en fonction de leur hauteur.

### f) Régler les deux dossiers localisés sur le pim (plan incliné mobile), pour maintenir en symétrie parfaite les pages droites et gauches du livre pendant la lecture.

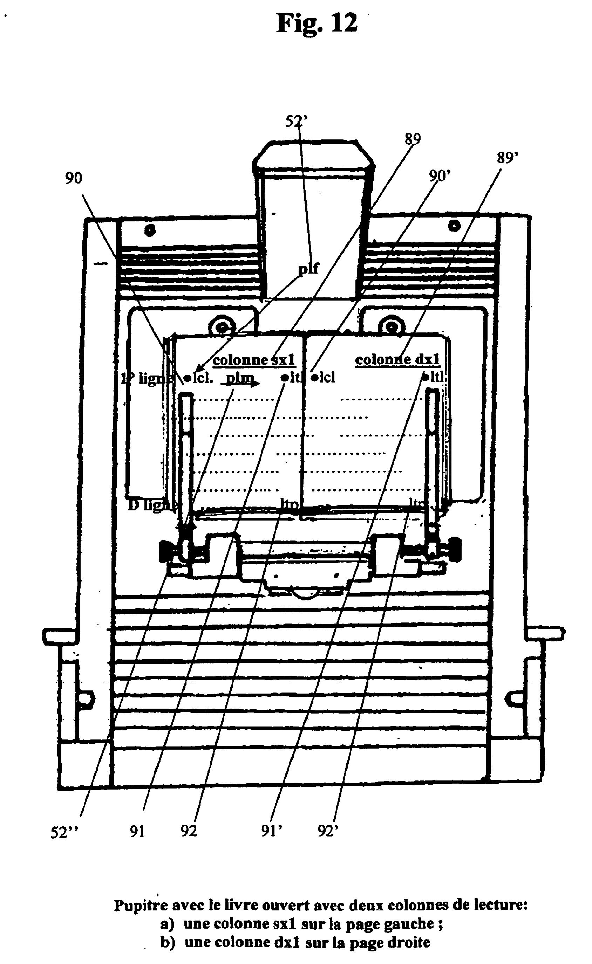

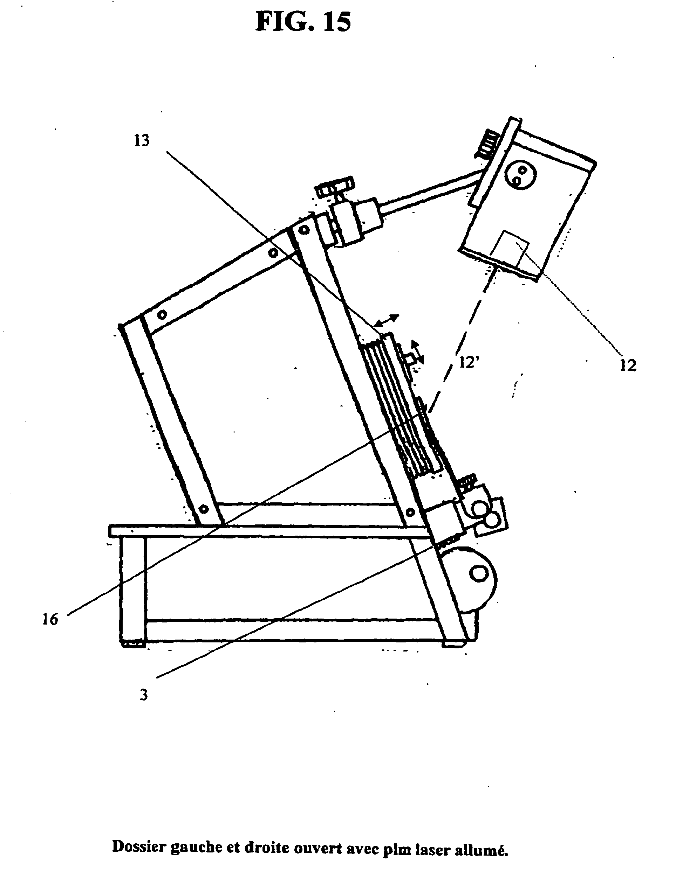

Les dossiers 13, 13' sont réglées, en ouverture et fermeture, dans le sens de la flèche double, comme il s'observe dans le point 13 (fig.15). L'opérateur doit régler ces deux dossiers de manière telle à obtenir avec le livre ouvert, le côté dx et sx en position parfaitement symétrique pendant la lecture. C'est-à-dire une surface de lecture uniforme sur les deux côtés et, ensuite, les pages du livre. Cette opération d'alignement des pages, faite par le jeu de régulation des deux dossiers 13, 13', elle est important, parce qu'elle permet au plm (point lumineux mobile) 52" (fig.12) de pouvoir couler sur les deux directions, (de gauche vers la droite - sens horaire aller - et, vice versa, de droite vers la gauche - sens inverse aux aiguilles d'une montre_retour), sur les lignes de lecture sans interférences. Cette opération derégulation et balancement des pages elle a lieu par l'intermédiaire de la rotation de deux respectives boutons de régulation des dossiers 17, 17', placées dans la partie haute du pim (plan incliné mobile) protégée et fermée par l'intermédiaire d'un petit guichet 18 ; les deux 10 dossiers, droits et gauches 13, 13', sont protégées, pendant leur ouverture et fermeture, par deux soufflets respectifs 14, 14'. En récapitulant, ce dispositif de blocage compact, il assure au système décrit, pendant les mouvements différents de montée et de descente, lente, rapide ou très rapide de l'étage incliné mobile 12, la rotation, l'élasticité et la stabilité du livre.

### g) La sûreté de l'opérateur pendant la lecture.

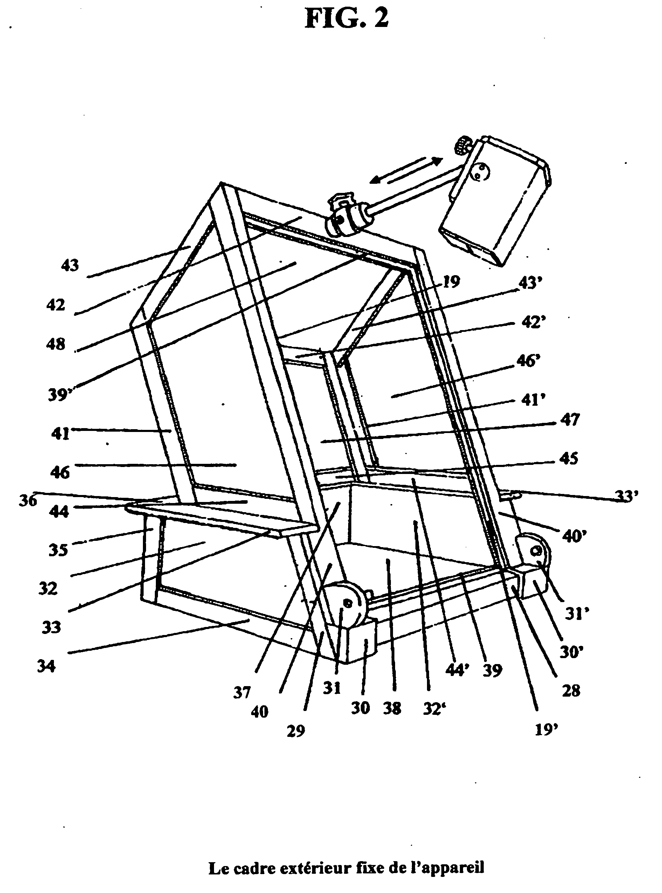

En ce qui concerne la sûreté de l'opérateur pendant la lecture, l'appareil est doué de moyens spéciaux de protection prévus pour son fonctionnement quels:
- deux soufflets supérieurs 2' et inférieurs 2 qu'ils protègent l'appareil pendant le soulèvement du pim (plan incliné mobile) ;
- bas voltage avec toutes les règles de sûreté à ce propos prévues (on signale la présence);
- deux photocellules 1,1' placées à la base inférieure de l'appareil, en des récipients à forme de semi lune, droite et gauche 31, 31', fig. 2, à protection de l'opérateur dans l'éventualité qu'il pénétrât dans la zone limite de fonctionnement du pim (plan incliné mobile) 12. L'introduction quelconque d'objets ou de parties mobiles du corps humain, les mains par exemple, dans cette zone, elle détermine l'activation des photocellules connexes au contrôleur à logique programmable qui déterminerait le bloc immédiat du pim (plan incliné mobile) 12.
- le contrôleur à la logique programmable pourvoit, en outre, toujours à réaliser le bloc immédiat du pim12 dans l'éventualité d'un extinction de courant de réseau ou pour type quelconque d'accident extérieur à l'appareil.

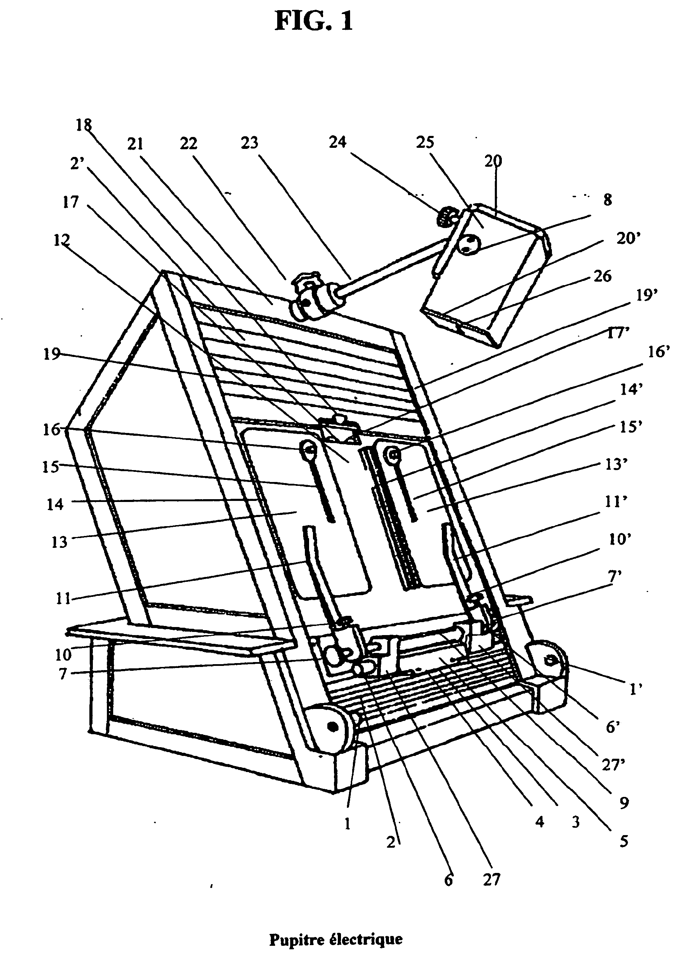

### Fig. 1 Numération des ses parties

1. - Photocellule sx. 1'. Photocellule dx. 2. Soufflet inférieur 3. Soufflet sous la base Mobile du pim, (visible dans la fig.11). 4. Bouton de régulation de la base mobile du pim, pour sa saillie ou renfoncement, (visible dans la fig,11). 5. Base mobile d'appui du pim. 6. Gobelet sx pré chargé avec ressort. 6'. Gobelet dx pré chargé avec ressort. 7. Noix sx vissée au rond sx, (d'allongement ou de rétrécissement). 7'. Noix dx vissée au rond sx, (d'allongement ou de rétrécissement). 8. Support de l'engrenage du bouton micrométrique. 9. Levier tubulaire rotatoire, contenant deux ronds sx et dx (dans lesuel ils s'allongent ou ils se raccourcissent). 10. Bouton de fixation de la hampe sx sur le rond sx, 10'. Bouton de fixation de la hampe dx sur le rond dx. 11. Hampe sx bloque page. 11'. Hampe dx bloque page. 12. Pim (plan incliné mobile). 13. Dossier sx. 13'. Dossier dx. 14. Soufflet sx avec rétro dossier sx fermé. 14'. Soufflet dx avec rétro dossier dx ouvert. 15. Boutonnière sx d'écoulement du bouton de vissage sur le dossier sx. 15'. Boutonnière dx d'écoulement du bouton de vissage sur le dossier dx. 16. Bouton sx de vissage (bloque la petite couverture sx du livre sur le pim). 16'. Bouton dx de vissage (bloque la petite couverture dx du livre sur le pim). 17. Bouton dossier sx, pour l'ouverture ou la fermeture de la même. 17'. Bouton dossier dx pour l'ouverture ou la fermeture de la même. 18. Petit guichet avec pommeau qu'il couvre les deux boutons des dossiers. 19. Guide sx latéral à "U" où il coule le pim (pas visible). 19'. Guide dx latérale à "U" où il coule le pim (pas visible). 20. Couvercle postérieur du récipient laser. 20' Couvercle antérieur du récipient laser. 21. Gobelet creux (accroche tuyau du récipient). 22. Pommeau qui bloque le tuyau mobile, qu'il accroche le récipient du plm. 23. Tuyau de connexion entre le récipient et l'appareil, réglable en longueur. 24. Bouton micrométrique qui donne l'inclinaison au récipient et, par conséquence, au rayon lumineux émis par le plm laser y contenu. 25. Récipient du plm laser. 26. Boutonnière (fenêtre) d'où il passe le plm rayon lumineux laser. 27. Petit cube sx creux de support à la base mobile du pim.

27'. Petit cube dx creux de support à la base mobile du pim.

### Illustration 2: elle montre le cadre extérieur fixe de l'appareil

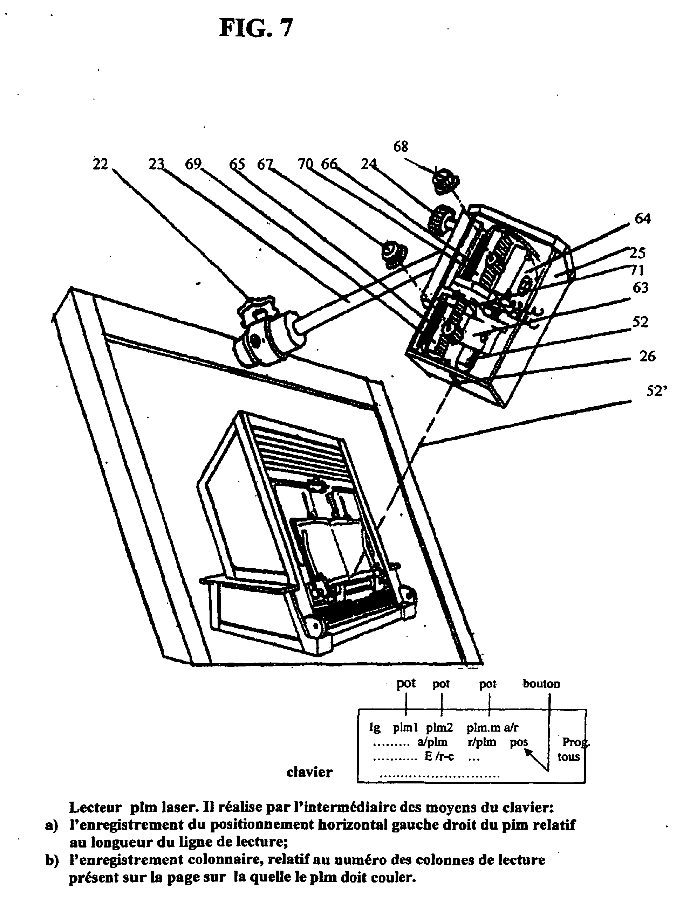

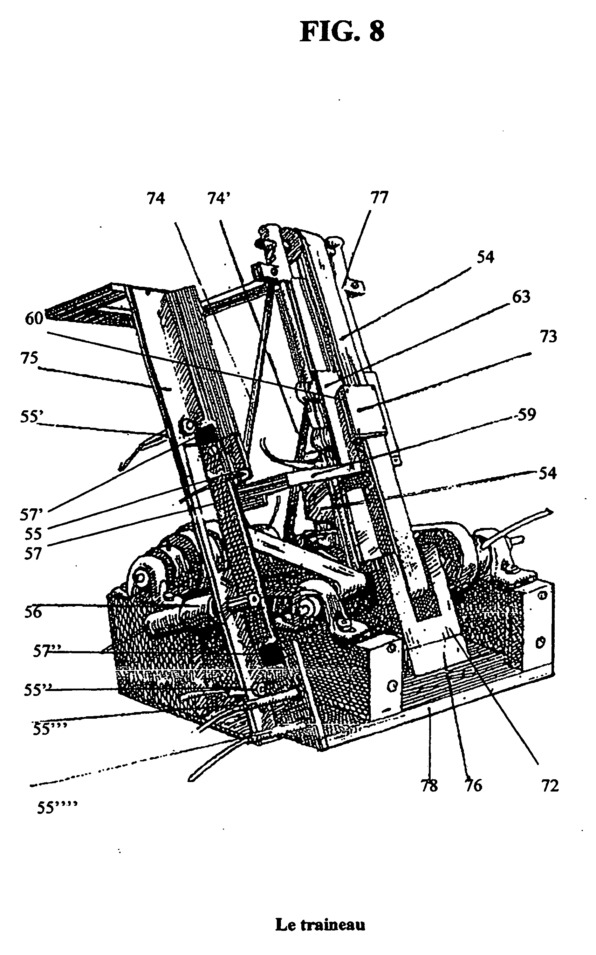

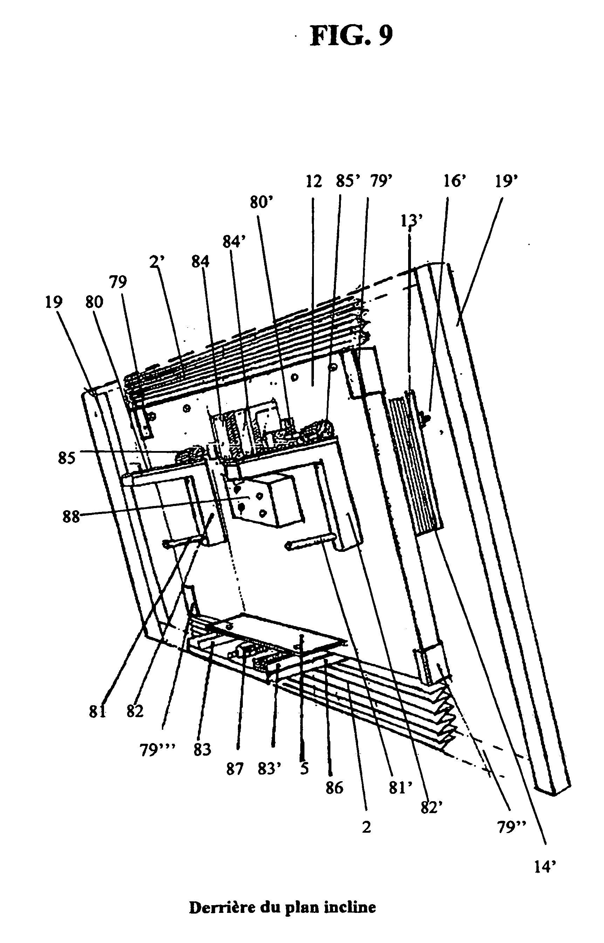

Dans l'illustration 2, on distinguent les bouts constituants la structure de logement de 1 appareil. En elle ils sont localisés soit:
- le mécanisme du traîneau, (fig. 8) et du p.i. (plan incliné) (fig 9) ;
- le récipient, (fig. 7) qu'il renferme le plm laser, (point lumineux mobile laser).

De l'union mécanique du traîneau avec l'étage incliné il naît le pim 12 (plan incliné mobile) auquel le mot. 1,54 fournit le mouvement vertical.

### Illustration n. 2. Numération de ses parties

28. Basse plaque frontale, longue, de soutien à la base. 29. Plaque petite antérieure sx inclinée à 60°. 29'. Plaque petite antérieure dx inclinée à 60° (pas visible).

30. Patte de lapin sx de soutien. 30'. Patte de lapin dx de soutien. 31. Semi lune sx contenant la photocellule sx. 31'. Semi lune dx contenant la photocellule dx.

32. Tôle latérale sx de revêtement du bas étage de l'enveloppe. 32'. Tôle dx latérale de revêtement de l'enveloppe. 33. Plaque longue sx latérale de revêtement de l'étage bas de l'enveloppe. 33'. Plaque longue dx latérale de couverture du plan bas de l'enveloppe. 34. Plaque longue sx latérale de soutien à la base. 34'. Plaque longue latérale dx de soutien à la base (pas visible). 35. Planton sx postérieur court à la forme de "L". 35'. Planton dx postérieur court à la forme de "L" (pas visible).

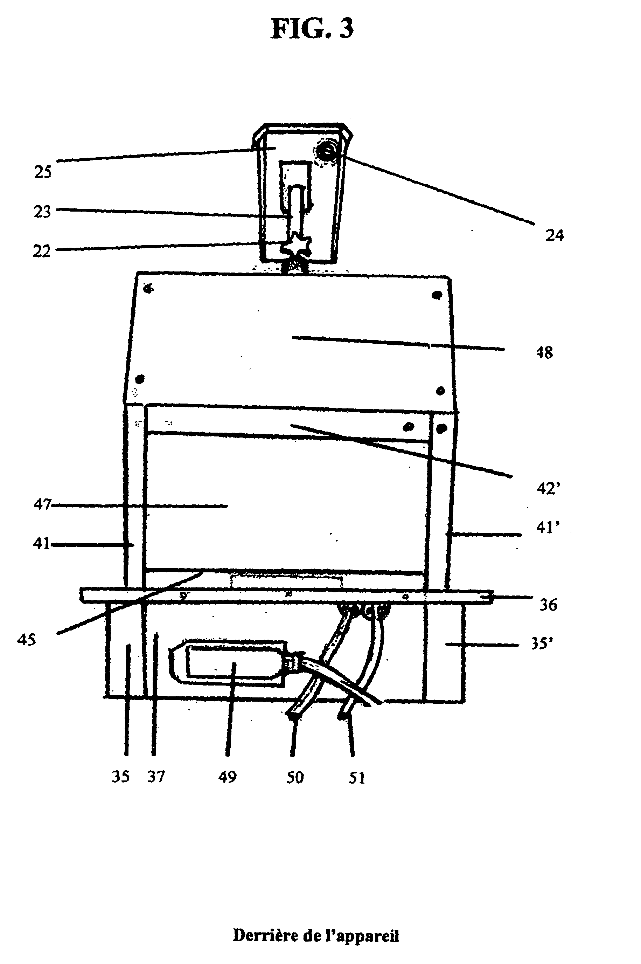

36. Plaque longue postérieure de couverture du plan bas de l'enveloppe, (mieux visible dans la fig. 3). 37. Tôle postérieure de revêtement du plan bas de l'enveloppe. 38. Tôle de la base de l'enveloppe. 39. Petit canal bas frontal, à la forme de «U», contenant la base basse du soufflet inférieur 39'. Petit canal frontal haut, à la forme de "U", contenant la base haute du soufflet supérieur. 40. Planton long antérieur sx à la forme de «L», incliné à 60°

40'.Planton long antérieur dx à la forme de «L» incliné à 60°. 41. Planton long postérieur sx à la forme de «L» incliné à 60°. 41'. Planton long postérieur dx à la forme de «L» incliné à 60°. 42. Plaque frontale, antérieure, de l'étage haut de soutien. 42' Plaque postérieure de l'étage haut de soutien de l'enveloppe. 43. Plaque antérieure sx de l'étage haut de soutien.

43'. Plaque antérieure dx de l'étage haut de soutien. 44. Plaque antérieure sx de l'étage moyen de soutien. 44'. Plaque antérieure dx du plan moyen de soutien.

45. Plaque postérieure de l'étage moyen de soutien de l'enveloppe. 46. Tôle antérieure sx de couverture de l'étage moyen haut de l'enveloppe. 46'. Tôle antérieure dx de couverture de l'étage moyen haut de l'enveloppe. 47. Tôle postérieure de couverture de l'étage moyen haut de l'enveloppe. 48. Tôle de couverture de l'étage supérieur (toit de l'appareil) ; elle est fixé soit sur la surface des quatre plantons longs inclinés à 60° (frontal sx et dx, postérieur sx et dx), soit sur la surface des quatre plaques correspondantes (frontal de l'étage haut, c'est- à-dire, latéral sx, latéral dx, postérieur sx et dx). 19. Guide à "U", (côté sx, d' écoulement du pim).19'. Guide à "U" (côté dx d'écoulement du pim) (pas visible).

### Illustration n.3. Exposition du derrière de l'appareil.

Dans cette illustration on met en évidence la partie postérieure de l'appareil qui montre les parties électriques, les câbles de connexion soit:
- au contrôleur à la logique programmable;
- soit au clavier.

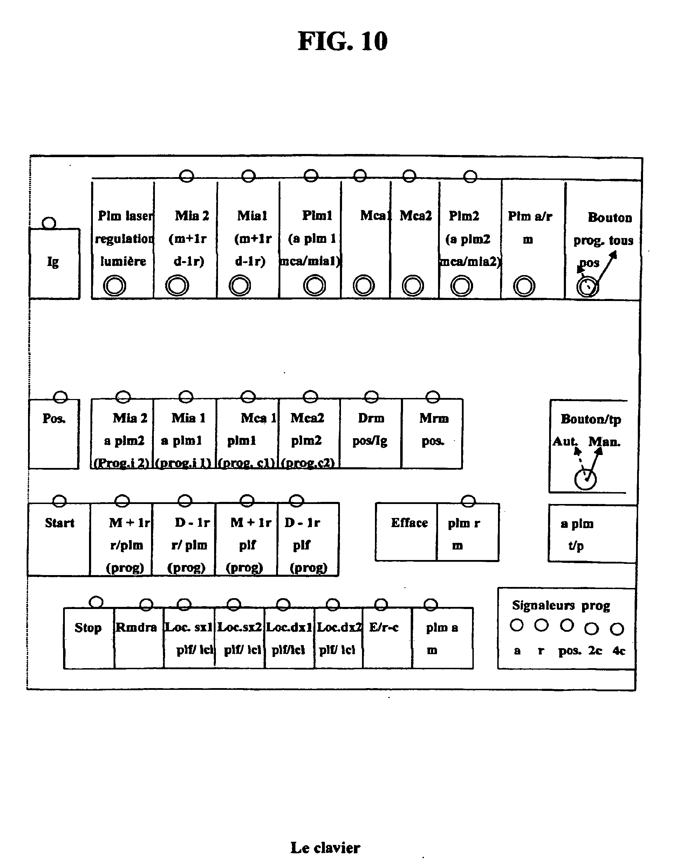

Cette dernière se met en évidence en forme matérielle, dans l'illustration principale de l'appareil, et en forme schématique dans la fig.10.

### Illustration n. 3. Numération des ses parties

On énumèrent les bouts suivants dont quelques-uns sont renommés pour mieux illustrer leur fonction. 35-35'. Planton sx postérieur court sx et dx. 36. Plaque longue postérieure.

37. Tôle postérieure de revêtement. 41-41'. Planton long postérieur sx et dx.

42'. Plaque postérieure de l'étage haut. 47. Tôle postérieure de revêtement. 48. Tôle de couverture de l'étage supérieur. 22. Pommeau de blocage. 23. Tuyau de connexion réglable entre le cadre fixe et le récipient, réglable en longueur.

24. Bouton micrométrique. 25. Récipient du plm laser. 45. Plaque postérieure.

49. Parties électriques entre l'appareil, le PLC et le Clavier. 50. Parties électriques entre l'appareil, le PLC et le Clavier. 51. Parties électriques entre l'appareil, le PLC et le clavier.

**Les illustrations 4, 5, 6, 7** sont d'aide soit dans la description générale du positionnement, soit dans la description des composants électromécaniques constituants le dispositif auxiliaire plm laser, qui permettent la réalisation pratique du positionnement susdit .

### La description générale du positionnement.

Le positionnement est effectué dans la phase initiale du plan de l'appareil en relation au document ou du livre à lire, soit en partie manuelle, par l'intermédiaire de la régulation de la distance du récipient 25 du pim 12, soit en réglant la projection du plf sur la ligne de lecture, soit avec les moyens du clavier qui sont joints au contrôleur à la logique programmable. Le positionnement concerne:
a) le mécanisme de réalisation du positionnement vertical haut-bas du pim et, par conséquence, l'enregistrement du positionnement haut-bas vertical du plm 52 " sur la colonne de lecture par l'intermédiaire des moyens du clavier ; il est relatif au numéro de ligne qu'ils constituent la hauteur du document de lecture sur lequel le plm (point lumineux mobile) 12 " doit réaliser le parcours haut bas et vice versa, pendant la lecture du livre ; exemple pratique : si la colonne de lecture d'une page est constituée par 20 lignes, (h=20 cm), le pim, après le plan de telle mesure, il devra monter et descendre pendant son fonctionnement automatique, semi-automatique ou manuel, toujours pour une hauteur de 20 cms;
b) l'enregistrement du positionnement horizontal gauche droit et vice versa, relatif à la longueur spécifique de la ligne de la colonne de lecture sur laquelle le plm doit réaliser le parcours (d'aller ou de lecture et de retour ou pas lecture); exemple pratique : si la longueur de la ligne de la colonne de lecture est de 15 cms, le plm, après l'enregistrement avec le bouton E/r-c, (enregistrement raie colonne), dans la mémoire du contrôleur à la logique programmable, il devra parcourir toujours la même distance de 15 cms sur la ligne susdite;
c) l'enregistrement colonnaire, c'est-à-dire du numéro de colonnes de lecture présentes sur la feuille ou sur la page du livre sur lesquelles il doit être programmé ; exemple pratique : si la page de lecture est composée de deux colonnes de lecture, une sur le côté gauche (sxl) et une sur le côté droit (dx1), le plm, après l'enregistrement avec le bouton E/r-c, (enregistrement raie colonnes) sur la page, il devra se succéder toujours sur ces deux colonnes. S'il y a par contre quatre colonnes, deux sur le côté gauche, sx1 - sx2, et deux sur le côté droit, dx1' - dx2', le plm, pendant la lecture, il devra se succéder toujours sur ces quatre colonnes et si aussi sur six colonnes, etc. etc.

La réalisation du positionnement vertical haut - bas du plm, comprend deux phases: la Phase, a1 et la phase a2.
a1) L'illustration n.4 expose le positionnement vertical haut du p1f, 52' sur le premier ligne. Dans cette illustration on montre le positionnement haut sur le premier ligne du livre du p1f point lumineux fixe 52' et les opérations manuelles relatives, effectuées par l'opérateur pour bloquer le livre sur l'appareil et le préparer à la lecture. Les directions axiales et rotatoires des flèches indiquent les fonctions et les mouvements correspondants des composants de l'appareil.

L'illustration n. 4 montre les parties de l'appareil, toutes précédemment recensées.

Pour le clavier, on renvoie à la figure n. 10.

L'illustration n. 5 montre le mécanisme et les composants relatifs électromécaniques intérieurs à l'appareil, à travers lesquels on réalise le déplacement vertical haut-bas du pim12 et, ensuite, par conséquence, le positionnement vertical haut-bas du plf 52' sur les lignes de lecture de la page.

### Fig. n. 5. Numération des ses parties

53. Courroie de soulèvement du pim. 54. Moto réducteur 1, jumelé à un second réducteur, (voir 60- 60'- 60 "- 60"'-60""). 55. Fch (fin course haute) 1 - mobile - du Mot. 1, localisé sur le côté inférieur de la crémaillère. 55'. Fch 2 - fixe - du moteur 2. 55". Fcb (fin course basse) 2 - fixe - du moteur 2. 55'". P. Fcb 1 - fixe - du moteur 1. 55"". Fcb 1 - fixe - du moteur1. 56. Mot. 2. 57. Crémaillère ; elle est remuée par le moteur 2 ; elle sert aussi de lfm (lame fer mobile) 2 du moteur2 ; sur son coté inférieur, comme déjà spécifié, est fixé un Fch 1 mobile du moteur 1. (55). 57'. Ce point représente le bout supérieur de la crémaillère qui est égal à la 1fm supérieure 2 du moteur 2. 57 ". Ce point représente le bout inférieur de la crémaillère qui est égal à la 1fm inférieure 2 du moteur 2. Pendant le mouvement de la crémaillère, ces deux bouts, en étant ferreuses, ils servent de 1fm 2 supérieure et de 1fm 2 inférieure du moteur 2.Elles activent respectivement. le Fca du moteur 2 (55') et le Fcb 2 du moteur 2, (55") en donnant le stop au moteur 2. 58. Lfm1 du moteur 1. 59. Plaque intermédiaire ; elle opère le la fixation de la courroie de soulèvement sur la plaque d'écoulement du traîneau 60-60'-60"-60"'- 60"". Composants électromécaniques du réducteur jumelé au moteur 1: deux frictions et un frein électromagnétique avec les relatives courroies et poulies. 61. Guide linéaire remuée par le moteur 2 par l'intermédiaire de la crémaillère ; à son bout haut et bas, ils sont fixés, respectivement, le fca 2 du moteur 2, (55') et le fcb 2 du moteur 2, (55 "). 62. Plaque d'écoulement du traîneau. **La partie hachurée a-b dans la figure n. 5** en correspondance de la crémaillère 57, elle représente la distance ou la marge de positionnement dans lequel le moteur 2, 56 ; elle peut déplacer, en haut ou en bas (dans l'espace a-b de 0 à 15 cms), par l'intermédiaire de la crémaillère 57, le fca 1 mobile du mot. 1 (55). Ce déplacement haut - bas il consent à l'opérateur de réaliser, de fois en fois, en base à l'exigence spécifique représentée par l'hauteur du livre, le positionnement spécifique du point fixe lumineux 52'. Cette régulation permet d'établir de fois en fois, le relatif parcours, haut-bas et vice versa, du pim 12 qu'il doit effectuer en relation au numéro des lignes qu'ils constituent la colonne de la page du livre de lecture, c'est-à-dire de l'hauteur du document. **La partie hachurée c-d de la figure n. 5,** en correspondance de la partie inférieure de la crémaillère, elle représente le parcours haut bas total du pim 12 opéré par le mot. 1 54, qu'il permet la lecture. Tel parcours peut changer de fois en fois, tant que elle dépend du type de livre utilisé. Pour tel motif on réalise la régulation sur spécifiée par l'intermédiaire des moyens du positionnement, soit mécaniciens qu'électriques. En ce qui concerne le clavier on renvoie à la figure n. 10.
a2) Fig. n. 6. Réalisation du positionnement vertical bas du plm 52 " sur le dernier ligne par l'intermédiaire des moyens du clavier.

Dans cette illustration on montre le positionnement bas du plf, (point lumineux fixe) 12' sur le dernier ligne de la colonne de lecture du livre objet de lecture.

Le plf du premier ligne de lecture, (fig. 4) se déplace sur le D1 (dernière ligne), de lecture (fig 6), grâce au soulèvement du pim 12.

Cette distance verticale de la première ligne à la dernière ligne, elle constitue le parcours net qui le pim doit effectuer pendant la lecture du livre.

Ce mécanisme est géré par le clavier dans la phase du plan initial par l'intermédiaire des poussoirs mrm (montée rapide manuelle), drm (descente rapide manuelle), pos.(positionne) dont les fonctions seront illustrées pendant la description du clavier.

Le plm 52 " peut parcourir la page et, ensuite, les lignes des colonnes de lecture, c'est-à-dire, programmées en sens vertical du haut vers le bas ou vice versa, grâce à le déplacement en sens perpendiculaire du pim, 12, actionné par le moteur 1, 54. Tel parcours est enregistré par le bouton enregistrement dans la mémoire du contrôleur à la logique programmable.

### Le plan du positionnement horizontal.

Le second plan concerne le positionnement horizontal gauche droit et vice versa relatif à la ongueur spécifique de la ligne de la colonne de lecture sur laquelle le plm doit réaliser le parcours, d'aller ou de lecture, et, de retour ou pas lecture. Le moteur à pas 64 qui, en tournant avec de la vitesse réglable à travers les moyens du clavier (fig 10) il déplace le plm 52" en direction gauche-droite (aller, c'est-à-dire en sens horaire ou de lecture), et vice versa droite-gauche, (retour, c'est-à-dire en sens inverse aux aiguilles d'une montre ou de pas lecture), sur la ligne de la page. Tel mouvement vient enregistré avec un bouton spécial (enregistrement) dans la mémoire du contrôleur à la logique programmable.

### Le plan colonnaire, c'est-à-dire le plan du numéro de colonnes de lecture.

Le troisième plan concerne le numéro des colonnes de lecture qu'il faut sélectionner, présentes sur le document ou page du livre sur lesquelles le plm 52 " il doit réaliser le parcours d'aller et de retour. Telles colonnes, comme nous savons, elles peuvent être soit sur chaque page de lecture, gauche ou droite, que plus qu'une. Ce plan arrive, par l'intermédiaire des moyens d'enregistrement présents sur le clavier, (fig. 10) unie au contrôleur à la logique programmable. Le buts du positionnement sont:

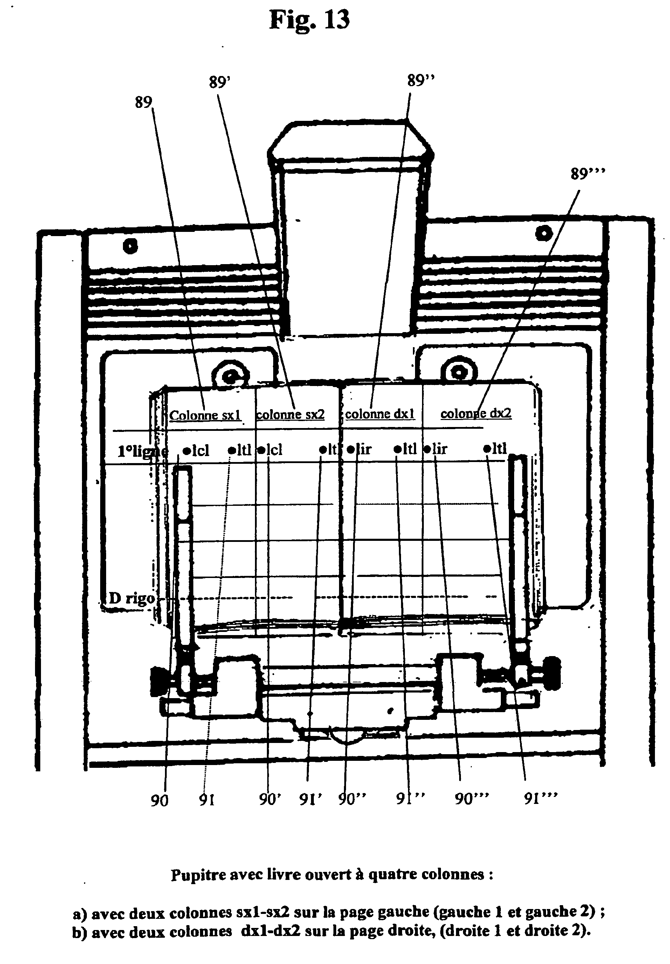

Les trois phases du susdit positionnement n. a, b, c réalisées par l'intermédiaire soit de la régulation manuelle que automatique, avec les moyens du clavier, connexe avec le contrôleur à la logique programmable, elles permettent pendant la lecture :
a) que le plm 52", pendant son parcours programmatique, de déplacement vertical haut-bas et vice versa, compris entre le premier et le dernier ligne des colonnes de lecture des pages, il ne doit pas dépasser jamais les marges soit supérieurs qu'inférieurs des lignes des colonnes susdites de lecture ;
b) que le plm 52", pendant son parcours programmatique de déplacement horizontal gauche vers la droite et vice versa sur la ligne de la colonne de lecture de la page, il ne doit dépasser jamais les marges latérales délimitées, sur le côté gauche de la ligne, par la Lcl, (lettre commence ligne), 90 - 90', (fig. 12) 90-90'-90 "-90"', (fig., 13), et sur le côté droit de la ligne, par la ltl (lettre terme ligne), 91 - 91', (fig. 12) 91-91'- 91"- 91"', (fig. 13) ;
c) que le plf 52' (point lumineux fixe), en phase initiale, se positionne soit manuellement qu'automatiquement par l'intermédiaire des moyens du clavier, sur les Lcl (lettres commence ligne), 90, 90', (fig. 12) ou 90, 90', 90", 90"', (fig. 13) des colonnes qui sont objet de plan, pendant que puis, en phase de lecture le plf 12' se transforme par l'intermédiaire des moyens du clavier, (fig. 10), en plm 52 ",
   (fig. 12), en se déplaçant de gauche vers la droite toujours sur les mêmes colonnes, (deux, quatre ou six, sélectionnées)..

### Fig. 7. Composants électromécaniques du plm laser.

### Fig. n. 7. Numération des ses parties.

Dans la partie haute et centrale de l'appareil, il est possible d'observer dans les fig. 4, 6, 7, le dispositif auxiliaire où est localisé le laser 52, qu'il émet la source lumineuse, ou le plf (point lumineux fixe), 52'. Ce dispositif est représenté par un récipient d'aluminium 25, joint par l'intermédiaire d'un tuyau de connexion 23, sur la plaque frontale 42, (fig. 2), du cadre extérieur fixe de l'appareil et, exactement, dans le gobelet creux 21 où est logé la partie terminale du tuyau de connexion 23. Ce gobelet par l'intermédiaire du bouton, 22, il permet de régler, longitudinalement, dans le sens de la flèche double, la position du récipient, au regard de l'étage incliné mobile, 12, (régulation faite selon l'exigence ou commodité de l'opérateur). Toujours tel récipient, 25, il peut être réglable dans l'inclinaison, par rotation, dans le sens de la flèche double, par un bouton micrométrique, 24, qu'il actionne les engrenages relatifs 8, (fig. 1). En phase de plan initial, le plf (point lumineux fixe) (ou rayon lumineux), 52', émis par le laser, 52, à travers la fenêtre du récipient, 26, il vient positionné par l'opérateur, pour rotation manuelle du récipient, par l'intermédiaire d'un bouton micrométrique, 24, sur la Lcl (lettre commence ligne) de la première ligne de lecture du livre,(fig. 4), (voir aussi 90, 90', illustration 12, ou 90, 90', 90", 90"', fig. 13). Ce laser, 52, contenu dans un petit cylindre, 63, uni sur l'axe d'un moteur 3 à pas, 64, actionné par le contrôleur à la logique programmable, il transforme le rayon lumineux, de point lumineux fixe, 52', en point lumineux mobile, 52". À protection du mouvement de rotation du laser sur le moteur 3 à pas, 64, ils viennent placés, à ses extrêmes, deux fin course magnétique, gauche et droite, 65, 66, du moteur trois 3 à pas, respectivement réglés dans le positionnement par deux crémaillères gauche et droite 69, 70, sur lesquels ils sont fixés. Telles crémaillères sont réglées dans la position par l'intermédiaire des pignons des deux boutons gauche et droite, 67, 68. Le moteur 3 à pas, 64, est doué d'un 1fm 3, d'une lame de fer mobile 3, 71, qui en tournant sur l'axe du moteur à pas, 64, en syntonie avec le laser, elle détermine l'arrêt de sûreté du moteur susdit dans le cas que, en phase de plan initial du plm sur les lignes de lecture, il se réalisât un plan erroné du moteur trois à pas, en dépassant les limites de sûreté prévues dans la rotation droite gauche du moteur à pas 64.

En ce qui concerne le clavier, on renvoie à la figure n. 10.

### La illustration n. 8 et l'illustration n. 9.

Elles représentent, respectivement, le traîneau et l'étage incliné.

Le traîneau s'accouple par l'intermédiaire des moyens de serrage, représentés par le couvre plaque de fixation de la courroie, 73, avec la surface de la couvre plaque de fixation de l'étage incliné, 88.De l'accouplement par l'intermédiaire du boulonnage de ces deux éléments, se forme le pim (plan incliné mobile), 12, remué par le moteur 1, (54).

### Fig. n. 8. Eléments constitutifs du traîneau ; numération des ses parties.

### Fig. n. 8. Numération des ses parties.

72. Base compacte de fixation des éléments du traîneau, soit des antérieurs que postérieurs. 73. Plaque de serrage de la courroie. Tel couvre plaque est doué sur sa surface de quatre trous passementés. 74. Planche sx portant, de soutien du traîneau. 74'. Planche dx portant, de soutien du traîneau. 75. Plaque d'aluminium sur laquelle ils sont montés 5 fcm (fin course magnétique). 76. Support de fixation du côté bas du traîneau. Ce support bloque, sur la partie extrême inférieure, les deux axes d'acier trempés, sx et dx de la guide. 77. Support de fixation du côté haut du traîneau. Ce support bloque, sur la partie extrême supérieure, soit les deux axes sx et dx portants, de soutien (74) 74', soit les deux axes d'acier trempés sx et dx de la guide. 78. La base plate d'appui de tous les éléments électromécaniques de l'appareil. 55"". Fcb1 - fixe - du moteur 1. 55"'. P-fcb1 (pré - fin course basse 1) - fixe. - du moteur 1. 55 ". Fcb2 - fixe - du moteur 2.

56. Moteur 2. 57. Crémaillère. 57'. Lfm (lame fer mobile) supérieure, moteur 2. 57". Lfm inférieure - moteur 2. 55. Fch (fin coure haute) 1 - mobile - du moteur 1; il est joint à la crémaillère 55'. Fch 2 - fixe - du moteur 2. 60. Plaque intermédiaire de fixation de la courroie sur la plaque du traîneau. 54. Courroie en polyuréthane de soulèvement du traîneau. 63. Plaque du traîneau, douée de tampons trempés. 59. Lfm (lame fer mobile) 1-du moteur 1. 54. Moto réducteur 1 jumelé à un réducteur formé de: deux frictions électromagnétiques et un frein électromagnétique avec des annexes courroies et poulies.

### Fig. n. 9. Eléments constitutifs du derrière de l'étage incliné, avec les deux guides latéraux.

### Fig. 9 Numération de ses parties.

79. Petit support de toboggan du pim (plan incliné mobile haut sx). 79'. Petit support de toboggan du pim haut dx. 79 ". Petit support de toboggan du pim bas sx. 79"'. Petit support de toboggan du pim bas dx. 80. Crémaillère sx sur guide linéaire, (elle ouvre et ferme le dossier sx). 80'. Crémaillère dx sur guide linéaire, (elle ouvre et ferme le dossier dx). 81. Axe sx de soutien et guide pour le déplacement de la crémaillère sx. 81'. Axe dx de soutien et guide pour le déplacement de la crémaillère dx. 82. Trompillon d'appui de la crémaillère, côté sx. 82'. Trompillon d'appui de la crémaillère, côté dx. 83. Guide sx linéaire de la base d'appui mobile du pim. 83'. Guide dx linéaire de la base d'appui mobile du pim. 84. Réducteur sx avec renvoi angulaire. Le bout de son axe lent, doué d'un bouton sx, 17, (localisé dans le petit guichet supérieur central du pim). 84'. Réducteur dx avec renvoi angulaire à 90°. Le bout de son axe lent est doué d'un bouton dx, 17', localisée dans le petit guichet supérieur central du pim. 85-85'. Roues dentées gauches et droites, unies à l'axe lent des deux réducteurs gauches et droits. 86. Base fixe du pim, où sont placées les deux guides gauches et droites d'écoulement de la base mobile d'appui du pim. 5. Base mobile d'appui du pim où le livre vient placé. 87. Axe à taille hélicoïdale. Le bout de cet axe est doué d'un bouton, (visible au point n. 4 de la fig. 11) localisé sous la base d'appui mobile du pim ; la rotation de ce bouton déplace telle base en avant ou en arrière; telle base, en outre, est recouverte par un soufflet (point n. 3 de la fig. 11). 88. Plaque de contact qui est boulonnée sur la surface du couvre plaque de serrage, 73. 13'. Dossier dx. 2'.

Soufflet supérieur. 2. Soufflet inférieur. 19. Guide fixe à "U" côté sx. 19'. Guide fixe au "U", côté dx. 12. Plaque base du pim où ils sont montés les composants recensés. 16' Bouton dx de vissage qui coule dans la boutonnière du dossier dx. 14'. Soufflet dx du dossier dx.

**L'illustration 10 montre le clavier** (tableau de commande) avec tous ses éléments constitutifs, poussoirs, interrupteurs, potentiomètres, boutons, signaleurs des programmes par espions led, connexe au programmateur à la logique programmable, pour le fonctionnement de l'appareil.

### Liste des éléments constitutifs du clavier :

**Ig: interrupteur général.**
**Fonction**: il éteint, allume l'appareil.
**Poussoirs stop.**
**Fonction :** il arrête les programmes insérés, en bloquant soit le pim que le plm.
**Poussoirs Start.**
**Fonction** : il fait reprendre le / les programmes suspendus, en activant soit le pim que le plm.

### Fonction générale des boutons et des poussoirs qui réalisent le plan.

### Bouton P : plan.

Dans la phase du plan, il prépare deux conditions de fonctionnement:
a) avec l'index de ce bouton préparé sur pos (positionne) on peuvent commencer les trois phases du positionnement du plm, de type vertical, horizontal, colonnaire ;
b) successivement, on prépare l'index, sur **prog. tous**, (programmes tous) et on peut réaliser l'insertion de tous les autres programmes de fonctionnement de l'appareil.

### Poussoirs positionne.

Il règle, dans la phase préliminaire, par l'intermédiaire du moteur 2, (56), le positionnement exact du fch1 mobile (fin course haute 1 mobile) du moteur. 1(55) afin que déterminer, en base à l'hauteur de la colonne de lecture du livre, de fois en fois, le parcours vertical haut bas du Pim12.

**N.b.** Tel bouton enregistre le parcours vertical haut bas du pim 12 et, par conséquence le numéro des lignes ou raies parcours en sens vertical, sur la colonne du document de lecture du plm 52 "-

### Poussoirs E / r-c (enregistrement ligne-colonnes).

Il réalise, dans la phase préliminaire:
a) l'enregistrement de la longueur de la ligne de lecture parcourue de gauche vers la droite et vice versa du plm 52 " sur la colonne du document ;
b) le numéro de colonnes de lecture présentes sur le document. Telles colonnes peuvent être présentes sur les pages du document en numéro variable, de deux, (une colonne sx1 sur la page gauche et une colonne dx1 sur la page droite, 89 - 89'), (fig. 12), ou en numéro de quatre, respectivement deux sur la page gauche (colonne sx1 et sx2) et deux sur la page droite (colonne dx1 et dx2), 89 - 89' - 89"- 89"', (fig. 13).

### Poussoir efface.

1 efface les fautes commises dans l'enregistrement exécuté pendant le plan du positionnement de lecture du livre.

Ces fautes sont rapportés soit à la longueur horizontale de la ligne de lecture, soit au numéro de colonnes de lecture présentes sur les pages, (voir pag.17, but du positionnement points b, c).

### Poussoir PLM a / m (Point lumineux mobile aller manuelle).

Il déplace par l'intermédiaire du moteur 3 (64), le point lumineux mobile, (52 ") de gauche vers le côté droit de la ligne.

### Poussoir PLM r / m (Point lumineux mobile retour manuel).

Il déplace le plm, (52 ") de droite vers la gauche de la ligne.

### Bouton t.p. man./aut. (tourne page manuel/automatique)

Avec l'index de ce bouton préparé sur **manuel**, quand on arrive avec le programme automatique i1 ou i2, ou avec le programme c1 ou c2 sur le dernier ligne de la page et, exactement, sur la ltp (lettre terme page), soit rapportée à deux colonnes, (sx1 - dx1), 89-89' (fig.12) que à quatre colonnes, (sx1 - sx2 ; dx1' - dx2'), 89 - 89' - 89" - 89"', (fig. 13), tel programme s'arrête et il reprendra seulement après avoir pressé le **poussoir aller point lumineux mobile tourne page** (voir en avant). Par contre avec l'index de ce bouton prédisposé sur **automatique**, le programme automatique inséré soit lui c1, c2 ou il, i2 il continu normalement et, donc, ne faut pas presser le poussoir aller plm tourne page.

### Poussoir a plm t.p. (aller point lumineux mobile tourne page)

Il rétablit la reprise des programmes i1 ou i2 ou des programmes c1 ou c2, c'est-à-dire des programmes de montée intermittente automatique 1 et 2, ou des programmes de montée continue automatique 1 et 2, du pim et du plm.

**Fonction générale des poussoirs de localisation:** ils font localiser, ils commandent le point lumineux dans la partie initiale de la ligne de lecture

Si le plan du plf 52' est effectué sur deux colonnes de lecture, une sur la sx1 et l'autre sur la dx1, en pressant **le poussoir loc. sx1-plf/1c1 (localisation sx1 point lumineux fixe lettre commence ligne)** on fait paraître, dans la phase du plan et aussi en les suivantes, pendant la lecture, le plf point lumineux fixe 52' sur la lcl (lettre commence ligne), 90 de la colonne gauche, 89, (fig. 12). En pressant

**le poussoir loc. dx1 plf /lcl (localisation dx1 point lumineux fixe /lettre commence ligne)** on fait paraître, le plf point lumineux fixe, 52,' sur la lir, (lettre commence ligne), 90' de la colonne droite, 89' (fig.12).

Si, par contre, le plan du plf point lumineux fixe, 52', est effectué sur quatre colonnes de lecture, deux sur la page gauche, (sx1 et sx2) et deux sur la page droite, (dx1 - dx2), en pressant

**le poussoir loc. sx2 plf/lcl, (localisation sx2 point lumineux fixe / lettre commence ligne)** on fait paraître, pendant la lecture, le plf point lumineux fixe, 52', sur la lcl, (lettre commence ligne), 90', de la colonne sx2, 89 ", fig. 13. En pressant **le poussoir localisation dx2 point lumineux fixe / lettre commence ligne (loc. dx2 plf /lcl),** on fait paraître, le plf point lumineux fixe, 52', sur la lcl, (lettre commence ligne), 90"' de la colonne dx2, 89"', fig. 13.

N.b. Si le plan était sur six colonnes de lecture, (trois sur la page gauche sx1, sx2, sx3 et trois sur la page droite dx1, dx2, dx3), on prévoit l'addition d'autres deux boutons de localisation sur le clavier **10 (poussoir localisation sx3 plf lcl et poussoir localisation dx3 plf lcl)** qui n'ont étés pas reportés pas sur le dessin du clavier, 10.

### Fonction générale des poussoirs manuels intermittents et continus

Ils activent, respectivement, les programmes manuels soit intermittents que manuels.

### Poussoir m+1 r/r plm prog (montée d'une ligne / retour plm programme)

A' chaque touche sur lui, il fait monter le pim,12, d'une ligne et, en même temps, à reporter le plm 52 " à la lcl, (lettre commence ligne) de la ligne correspondante.

### Poussoi d-1 r/r plm prog.r (descente d'une ligne / retour plm programme)

A' chaque touche sur lui, il fait descendre le pim, 12, d'une ligne et, en même temps, à reporter le plm, 52", à la lcl (lettre commence ligne) de la ligne correspondante.

### Poussoir m+1r/plf prog. (montée d'une ligne / point lumineux fixe programme)

A' chaque touche sur lui, il fait monter le pim,12, d'une ligne et il laisse inchangé la fonction du plm, 52".

**Poussoir d-1 / plf prog. (descente d'une ligne / point lumineux fixe, programme)** A' chaque touche sur lui, il fait descendre le pim, 12, d'une ligne et il laisse inchangé la fonction du plm, 52". **Poussoir mrm/pos. (montée rapide manuelle / positionnement)**

Il active la montée manuelle du pim soit pendant le positionnement initial qui en phases suivantes pendant le fonctionnement de l'appareil.

### Poussoir drm/pos. i.g. (descente rapide manuelle / positionnement interrupteur général)

Il active la descente manuelle du pim, pendant les différents programmes de fonctionnement de l'appareil, soit pendant le positionnement initial, soit dans la phase qui précède l'extinction de l'appareil dans laquelle s'insère, automatiquement, par l'intermédiaire de l'extinction de l'appareil avec l'interrupteur général.

**Fonction générale des poussoirs automatiques:** ils activent les programmes automatiques intermittents/continus.

### Poussoir mia1/a plm1 prog. i. 1(montée intermittente automatique 1 / aller plm1, programme intermittent1)

Il active l'insertion du programme automatique intermittent 1, c'est-à-dire l'insertion contemporaine du programme **mia1** (montée intermittent automatique), du pim, 12, et le déplacement contemporain du programme **a plm 1** (aller point lumineux mobile 1 du plm), 52", sur la colonne sélectionnée.

### Poussoi mia2 / a plm2 prog. i. 2 montée intermittent automatique 2 /aller point lumineux mobile 2, programme intermittent 2)

Il active l'insertion du programme automatique intermittent 2, c'est-à-dire l'insertion contemporaine du programme **mia2** (montée intermittente automatique 2), du pim, 12, et le déplacement contemporain du programme **a plm 2** (aller point lumineux mobile 2 du plm), 52", sur la colonne sélectionnée.

**Poussoir mca1/a plm 1 prog. c.1 (montée automatique continue 1, plm1, programme continu 1)** Il active l'insertion du programme automatique continu 1, c'est-à-dire l'insertion contemporaine du programme **mca1** (montée continue automatique 1) du pim, 12, et le déplacement contemporain du programme **a plm 1** (aller point lumineux mobile 1) du plm, 52", sur la colonne sélectionnée.

### Poussoir mca2/a plm 2 prog. c.2 (montée continue automatique 2 / aller plm 2, programme continu 2)

Il active l'insertion du programme automatique continu 2, c'est-à-dire l'insertion contemporaine du programme **mca2** (montée continue automatique 2), du pim, 12, et le déplacement contemporain du programme **a plm 2** (aller point lumineux mobile 2 du plm), 52", sur la colonne sélectionnée.

### Poussoir rmdtra (répétiteur manuel de la descente très rapide automatique).

Il sert pour insérer manuellement, (pour digitation du bouton susdit), la descente très rapide automatique du pim.

### La dtra (descente très rapide automatique).

La dtra est l'équivalent du répétiteur manuel de la descente très rapide automatique.

La différence consiste dans le fait qui le dtra, respecte au rmdtra elle n'est pas douée de poussoir sur le clavier, mais elle s'insère automatiquement quand le pim, 12, pendant le fonctionnement automatique des différents programmes de montée soit continus qu'intermittents, il arrive dans le point haut de la montée programmée, où il active le fch1 - mobile - moteur 1 (55) qui insère la dtra (descente très rapide automatique), qui se pré arrête, pour activation du fcb du moteur 2, (55") et il s'arrête, définitivement, avec l'activation du fcb du moteur 2, après quoi le mécanisme automatique se rétablit selon le plan fait.

### Fonction générale des potentiomètres.

Ils règlent soit la vitesse de déplacement linéaire du plm, 52", soit la vitesse de déplacement linéaire ou intermittent du pim, 12, comprise la régulation de luminosité du laser.

### Potentiomètre mca1(montée continue automatique 1)

Il règle la vitesse de montée automatique continue du pim, 12.

**Potentiomètre mia1 m+1/d-1re (montée intermittent automatique 1 montée d'une ligne / descente d'une ligne)** Il règle le programme de montée et de descente intermittente automatique 1 du pim, 12. Il règle, en même temps, la montée manualel du pim, d'une ligne pour fois, qui se active en pressant le poussoir m+1r / r plm (prog.), ou la descente manuelle d'une ligne pour fois qui se active en pressant le poussoir d-1r/r plm (prog.).

N.b. Dans le cas fût en marche un des quatre programmes automatiques, (soit continus, mca1 ou mca2 que intermittents, mia1 ou mia2), on peut intervenir sur eux en insérant un des quatre programmes manuels intermittents m+1r r/plm, (prog.), d-1r r/plm, (prog.), m+1r r/plf (prog), d-1r r/plf, prog.). Ces programmes manuels intermittents, quand ils sont activés par la touche, ils suspendent le programme préexistant et ils insèrent le programme intermittent correspondant, faisant référence toujours au programme pré inséré, c'est-à-dire au programme 1 ou 2. Successivement le programme préexistant reprend.

**Potentiomètre plm 1 a plm1-mca/mia1 (point lumineux mobile 1 aller plm 1-montée continue automatique / montée intermittente automatique 1).** Il règle la vitesse d'aller du point lumineux mobile 1 du programme a plm sur la ligne de la colonne de lecture sélectionnée, indifféremment, soit pour le programme mca1 (montée continue automatique) soit pour le programme mia1 (montée intermittent automatique 1).

### Potentiomètre mia2 m+1r/d-1 (montée intermittent automatique 2 monté d'une ligne / descente d'une ligne) du pim

Ce potentiomètre sert à régler la montée intermittente automatique 2 du pim. Il règle, en même temps, soit la montée que la descente manuelle 2 du pim d'une ligne pour fois que se active en pressant, (en donnant une touche), ou sur le poussoir m+1r /r plm, prog. ou sur le poussoir d-1r / r plm, prog.

### Potentiomètre plm 2, a plm 2-mca/mia 2 (point lumineux mobile 2, aller point lumineux mobile 2-montée continue automatique/montée intermittente automatique2)

Il règle la vitesse du plm 2 du programme **a plm 2,** (aller point lumineux mobile 2) sur la ligne de lecture de la colonne sélectionnée, correspondante, soit pour le programme montée continue automatique 2 du pim, soit pour le programme montée intermittente automatique 2 du pim.

### Potentiomètre mca 2 (montée continue automatique 2, du pim)

Il règle la vitesse de montée continue automatique 2 du pim.

### Potenziomètre PLM a / r m (point lumineux mobile aller/retour manuel)

Il règle la vitesse du plm, (52 "), en même temps, pour les programmes plm a/m (point lumineux mobile aller/manuelle), et plm r/m (point lumineux mobile retour/manuel), respectivement activés par les deux poussoirs PLM a /m et PLM r/m.

### Potentiomètre plm laser régulateur lumière.

Il règle la luminosité du rayon lumineux du plm laser.

### Signaleur des programmes avec led témoin.

Il signale, par l'intermédiaire de l'allumage des led, les programmes qui s'insèrent dans l'appareil : **a** (allér plm) ; **r** (retour plm); **pos.** (positionne, réalisation du positionnement vertical; 2 colonnes (plan du fonctionnement du plm sur deux colonnes, sx et dx, du document de lecture); quatre colonnes (plan du fonctionnement du plm sur quatre colonnes sx1-sx2, dx1-dx2, du document de lecture).

Les autres signaleurs led sur le clavier s'allument pour signaler le fonctionnement du Programme.

**Les figures n. 11, 12, 13**, dans leur ensemble, elles montrent le pupitre électrique pour la lecture dans les poses différentes, avec et sans le livre.

**La figure n. 11 montre le pupitre sans le livre.**

Elle met en évidence: le soufflet 3 sous la base réglable de l'étage incliné;
le bouton de rotation qui règle le déplacement de la base d'appui réglable de l'étage incliné; la base d'appui réglable 5 de l'étage incliné.

**La figure n. 12 montre le pupitre électrique avec le livre ouvert avec deux colonnes de lecture.**

Par l'intermédiaire du plf, 52', et son déplacement suivant, sous forme de plm, 52", et en syntonie avec le déplacement du pim, 12, est possible d'obtenir sur le poste, au moyen des moyens du clavier 10, différents programmes de fonctionnement réglables par l'opérateur. Rentrent dans le plan des programmes différents les points suivants :
**les lcl (lettres commence ligne) 90, 90' ;** ils représentent les points de départ dans lesquels le rayon lumineux ou plf, 12', se va positionner en restant immobile. Cette localisation arrive au moyen des moyens du clavier, (voir les poussoirs de localisation) ;
**les ltl, (lettres terme ligne), 91,91' ;** elles représentent les points d'arrivée ou terminaux de la ligne, où le plm, 52", pendant son parcours programmé, (voir les poussoirs spécifiques, qui l'activent), il se bloque, il s'éteint et il retourne en arrière, exactement à la lcl, (lettre commence ligne), de la ligne suivante de lecture, pour puis reprendre le déplacement comme de plan ;
**les ltp, (lettre terme page), 92, 92' ;** ils représentent les points d'arrivée ou terminaux du plm, 52", soit de la ligne qui de la page sur la ligne. Quand le plm, 52", après avoir parcouru, comme de plan, de gauche à droite toutes les raies de la colonne de lecture, il arrive en forme automatique, sur le dl, (dernière ligne) et sur la ltp, (lettre terme page), 92, 92', (fig. 12) de lecture du document, (avec le pim 12 qui, dans ce cas, il se trouve dans le point le plus haut de la montée), il fait toujours suite l'insertion soit du programme automatique de la dra (descente rapide automatique) du pim 12, soit du programme r **plm**, (retour point lumineux mobile), c'est-à-dire, le plm 52" revient de nouveau, avec de la vitesse très élevée, sous forme de pem, (point éteint mobile), au début de la lir, (lettre commence ligne), 90', (fig. 12), de la première ligne de la nouvelle page de lecture, où il se rallume, en reprenant son parcours en automatique, sous forme de **a plm**, (allér point lumineux mobile), 52", en syntonie avec ce de montée automatique intermittente ou continue du pim, (12), comme de plan. Pour l'explication de tous les programmes manuels, semi-automatiques et automatiques, soit du plm présentes sur l'appareil, on renvoie au clavier, où tels programmes ont été décrits ;
**la figure n. 13 montre le livre ouvert avec quatre colonnes de lecture :** la colonne sx1, 89; la colonne sx2, 89' ;la colonne dx1, 89"; la colonne dx2, 89'" avec les respectifs lcl (lettres commence ligne), 90, 90', 90", 90"' et
avec les respectifs ltl, (lettres terme ligne), 91, 91', 91", 91"' ;
finalement, les illustrations n.14 et n. 15 montrent le pupitre électrique vu de côté ;
**la fig. n.14 met en évidence les dossiers 13, 13', fermées avec le laser, 52, éteint ;**
**la fig. n. 15 met en évidence le dossier 13, ouverte avec le laser, 12, allumé qui émet le plf, (point lumineux fixe), 52'.**

### Tables de dessin

On présentent quinze tables de dessin, ordonnées de manière progressive représentantes le pupitre électrique.
- fig. 1: Pupitre électrique.
- fig. 2: Cadre extérieur fixe de l'appareil.
- fig. 3: Derrière de l'appareil.
- fig. 4: Positionnement vertical haut du plm sur la 1° ligne de la page, de type manuel.
- fig. 5: Positionnement vertical haut bas du pim et conséquemment du positionnement vertical haut bas du plm sur la colonne de lecture par les demi du clavier.
- fig. 6: Positionnement vertical bas du plm sur le dernier ligne de la page par les moyens, du clavier.
- fig. 7: Le lecteur plm laser. Il réalise par l'intermédiaire des moyens du clavier:
a) l'enregistrement du positionnement horizontal gauche droit du pim relatif au longueur du ligne de lecture ;
b) l'enregistrement colonnaire, relatif au numéro des colonnes de lecture présentes sur la page sur la quelle le plm doit couler.
- fig. 8: Le traîneau.
- fig. 9: Derrière du plan incliné.
- fig. 10: Le clavier.
- fig. 11: Pupitre sans livre.
- fig. 12: Pupitre avec livre ouvert avec deux colonnes de lecture:
a) une colonne sx1 sur la page gauche ;
b) une colonne dx1 sur la page droite
- fig. 13: Pupitre avec livre ouvert à quatre colonnes:
a) avec deux colonnes sur la page gauche,(gauche 1 et gauche 2);
b) avec deux colonnes sur la page droite, (droite 1 et droite 2).

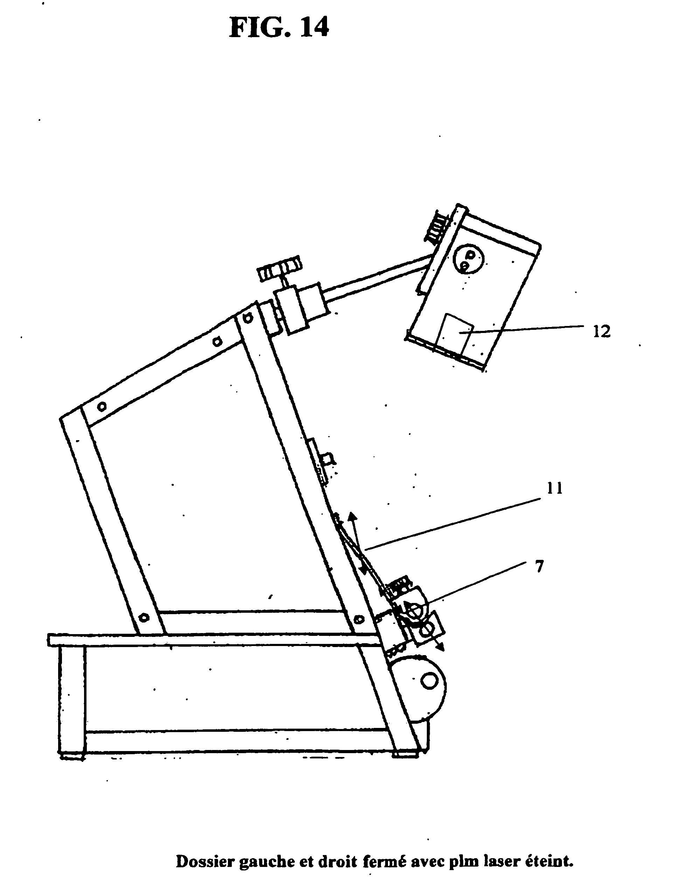

- fig. 14: Dossier gauche et droite fermé avec le plm laser éteint.
- fig. 15: Dossier gauche et droit ouvert avec le plm laser allumé.

## Revendications

1. **Pupitre Électrique pour la lecture comprenant:**
(a) un cadre extérieur fixe (fig.2) ;
(b) un plan incliné mobile, (p.i.m., 12), destiné à supporter, par l'intermédiaire de moyens de soutien, un livre ou un document, mis sur la base d'appui réglable (5) du plan incliné avant d'être lu; ce plan incliné, étant connecté au cadre extérieur fixe (fig. 2), par deux guides latéraux (19, 19', fig. 9) le long desquelles il peut glisser selon une orientation essentiellement verticale, de manière à déplacer le document perpendiculairement au sens de la lecture ;
(c) une source de lumière laser (52, fig. 7), destinée à projeter un rayon lumineux ou point lumineux soit fixe (52', soit mobile (52") sur la surface visible du document ;
(c1) le point lumineux fixe (52'), étant transformé en point lumineux mobile (52"), suite à l'actionnement du clavier (10) par l'opérateur, le point lumineux mobile se déplaçant en sens horizontal et perpendiculaire au mouvement du plan incliné mobile (12), de façon à suivre la ligne de lecture du document à lire ;
(c2) cette source de lumière laser est contenue dans un récipient (25), connexe au cadre fixe extérieur par l'intermédiaire de moyens mécaniques qui permettent à l'opérateur de régler soit la distance du récipient (25) du plan incliné mobile (12) soit de régler l'inclinaison du récipient (25) de façon à acheminer, en phase de plan; le rayon lumineux directement sur la première ligne du document de lecture (fig. 4) ;
(d) un contrôleur à logique programmable et un tableau de bord électrique constitué par un clavier (10) muni de touches, poussoirs, potentiomètre et signaleurs LED, destinés à contrôler les mouvements du plan incliné mobile (12) et du point lumineux mobile (52") pour qu' ils soient synchronisés et que le point lumineux mobile suive les lignes du texte à lire en séquence sur les colonnes de lecture présélectionnées sur la page gauche ou droite du document, avant d'être lu.

2. Pupitre Électrique selon la revendication 1, **caractérisé par** un contrôleur à logique programmable, un tableau de commande électrique ou clavier (fig. 10) comprenant:
(e) des moyens pour sélectionner de manière automatique, semi-automatique ou manuelle les différentes vitesses de fonctionnement du plan incliné mobile (12) et/ou du point mobile lumineux (52") sur les lignes des colonnes du document, de manière à ce que chaque lecteur puisse, utiliser l'appareil à la vitesse de lecture correspondant le mieux à ses capacités.

3. Pupitre Électrique selon la revendication 1 ou 2 **caractérisé par** un contrôleur à la logique programmable, un tableau de commande électrique ou clavier (fig. 10) comprenant:
(f) des moyens pour régler la position de départ et la position de arrêt de la course du plan incliné mobile (12) et, optionnellement, des moyens pour régler le déplacement vertical haut bas du point lumineux mobile (52").

4. Pupitre Électrique selon la revendication 3 **caractérisé par** un contrôleur à logique programmable, un tableau de commande électrique ou clavier (fig. 10) comprenant:
(f1) des moyens pour sélectionner sur le document, avant d'être lu, le nombre des colonnes (89, 89', 89", 89"') présentes sur la page sur laquelle doit circuler le point lumineux mobile (52");
(f2) des moyens pour régler la course horizontale du point lumineux mobile (52") de la gauche vers la droite et vice versa sur les lignes de lecture (90, 91) en tenant compte de la longueur effective de la ligne sur le document.

5. Pupitre Électrique selon une des revendications de 1 à 4, **caractérisé par** un contrôleur à la logique programmable, un tableau de commande électrique ou clavier (fig. 10), comprenant:
(g) des moyens sur le clavier (fig. 10), permettant de choisir parmi deux modes de déplacement du plan incliné mobile (12);
(g1) un mode de type continu au moyen duquel le plan incliné mobile se déplace avec un profile de vitesse linéaire;
(g2) ou un mode de type temporisé, au moyen duquel, le plan incliné mobile (12) se déplace avec un profil de vitesse intermittent.

6. Pupitre Électrique selon une des revendications de 1 à 5 **caractérisé par**:
(h)des moyens de blocage du livre, sur la surface de la base d'appui (5) horizontale réglable du plan incliné; ces moyens, qui concourent à fixer le livre sur cette base, sont constitués de:
(h1) un bouton (4, fig. 11), qui règle le déplacement de la surface de la base d'appui (5, fig. 11, fig.4) du plan incliné, en rapport à la grandeur ou dimension du livre à contenir;
(h2) d'un levier tubulaire rotatoire élastique (9) connexe par l'intermédiaire de deux axes latéraux, gauche et droit, avec des moyens (7, 7') à la base d'appui (5) de l'étage incliné où, le levier susmentionné peut tourner et bloquer la base du livre (fig.4, fig.12, fig. 13) ;
(h3) de petits boutons de vissage (16, 16'), coulissants en sens vertical dans leurs boutonnières respectives, qu'ils bloquent selon l'hauteur du livre la couverture gauche et droite sur les deux dossiers gauches et droits (13, 13') du plan incliné.
(i) des moyens pour maintenir les pages du livre en position fixe, sur la surface d'appui vertical du plan incliné au cours de la lecture ; ces moyens sont constitués de:
(i1) deux hampes filiformes gauches et droite (11, 11') réglables en sens longitudinal et/ou rotatoire et appliquant une légère pression transmise par le mouvement rotatoire du levier tubulaire élastique (9) qui permet de bloquer et maintenir en position fixe les pages du document pendant la lecture (fig. 4, 12, 13) ;
(l) des moyens pour régler sur l'étage incliné la position symétrique des parties gauches et droites du livre ; cet alignement garantit le parcours linéaire du point lumineux mobile (52"), sans interférences, sur les lignes des les deux pages du document pendant la lecture; ces moyens sont constitués de:
(l1) deux dossiers, gauche et droite (13, 13'), réglables par l'intermédiaire de deux boutons (17, 17') ;

7. Pupitre Électrique selon une des revendication de 1 à 6 **caractérisé par**:
(m) des moyens qui garantissent la sécurité de l'opérateur pendant la lecture, et pendant le fonctionnement de l'appareil ;
(m1) ces moyens sont constitués de deux photocellules (1, 1') placées à la base inférieure de l'appareil, connectées au tableau de commande électrique du contrôleur à logique programmable; ces photocellules, lorsqu' elles sont activées, agissent en bloquant le mouvement du plan incliné mobile (12) ;
(m 2) le contrôleur à logique programmable prévoit, en outre, le blocage instantané du plan incliné mobile (12) dans le cas d'une interruption involontaire de courant pendant le fonctionnement de l'appareil.

## Claims

1. Electric Lectern for the Reading, including:
a) An external fixed frame;
b) A movable inclined plane (m.i.p. 12) fit to bear through some supports a book or document, which will be placed on the adjustable bearing surface (5) of the inclined plane in order to be read; this inclined plane is connected to the fixed external frame (fig. 2) through two lateral slides (19, 19', fig. 9), along which it can move in an essentially vertical direction, so that the document can be shifted perpendicularly to the reading's direction.
c) A laser light source (52, fig. 7), which will project a luminous beam or a luminous fixed (52') or movable (52") point on the front page of the document:
(c1) the fixed luminous points (52') will become movable (52") after the keyboard's switching by the operator (10); when it gets movable, it moves horizontally and perpendicularly to the movement of the movable inclined plane (12), so that it follows the lines of the document to read;
(c2) this laser light source is placed in a case (25) which is connected to the external fixed frame through some mechanical elements which allow the operator to adjust both the distance of the case (25) from the movable inclined plane (12) and also the case's inclination (25). In this way in the programming phase he is able to converge the luminous beam directly on the first line of the document (fig. 4).
d) A controller with programming logic and an electric control board made up of a keyboard (10) with keys, push buttons, potentiometers and LED signal systems, set to control the movements of the movable inclined plane (12) and of the movable luminous point (52") so that they can be synchronized and the luminous point can follow in sequence the lines of the text to read in the columns previously selected on the right or left page of the document to read.

2. Electric Lectern as at point 1, with a controller with programming logic, an electric control board or keyboard (10) including:
e. Some commands to set automatically or in a partially automatical way or manually the different operating speed of the movable inclined plane (12) and/or of the movable luminous point (52") along the lines of the document's columns, so that each reader can use the device at the speed which suits best their ability.

3. Electric Lectern as at point 1 or 2, with a controller with programming logic, an electric control board or keyboard (fig. 10) including:
f. Some commands to set the start and stop position of the inclined plane's movement (12) and, optionally, some commands to adjust the vertical movement up-down of the movable luminous point (52").

4. Electric Lectern as at point 3, with a controller with programming logic, an electric control board or keyboard (10) including:
(f1) Some commands to select on the document, before reading it, the number of columns on the page over which the movable luminous point (52") has to move (89, 89', 89", 89"')
(f2) Some commands to control the horizontal movement of the movable luminous point on the lines to read (90, 91) from left to right and viceversa, considering the actual length of the document's lines.

5. Electric Lectern as at points from 1 to 4, with a controller with programming logic, an electric control board or keyboard (10) including:
g. Some commands on the keyboard (fig. 10) which allow to choose between two different kinds of movement of the movable inclined plane:
(g1) A continuous way of functioning, with which the movable inclined plane (12) moves with a linear speed;
(g2) A timed way of functioning, with which the movable inclined plane (12) moves with an intermittent speed;

6. Electric Lectern as at points from 1 to 5, with a controller with programming logic, an electric control board or keyboard (10) including:
h. Some devices for the book fastening on the adjustable horizontal bearing surface of the inclined plane (5); these devices, which have to fix the book on this base, are made up of:
(h1) A knob (4, fig. 11) which adjusts the movement of the bearing surface (5, fig. 11, fig. 4) of the inclined plane, according to the size or dimensions of the book it has to contain;
(h2) A flexible tubular rotating lever (9) connected with some stuffs (7, 7') to the bearing surface of the inclined plane through two side boards on the right and on the left, where the above mentioned lever can rotate and fasten the base of the book (fig. 4, fig. 12, fig. 13)
(h3) Little screwing handles (16, 16') which can slide vertically in their respective housing and can fasten -according to the book's size - the left and right cover of the book to the right and left sides (13, 13') of the inclined plane.
i. Some devices to keep the book's pages in a fixed position on the vertical bearing surface of the inclined plane during the reading; these devices are made up of:
(i1) two threadlike rods on the left and on the right (11, 11') which can be adjusted lengthwise and/or in rotating direction; the rods exert a light pressure originating from the rotating movement of the flexible tubular lever (9) which allows to fasten and keep in a fixed position the document's pages during the reading (fig. 4, 12, 13);
l. Some devices to adjust the symmetrical position of the left and right part of the book on the inclined plane; this alignment ensures the linear movement of the movable luminous point (52") on the lines of the two document's pages during the reading without any interferences; these devices are made up of:
(l1) two boards, on the left and on the right (13, 13'), which can be adjusted through two handles (17, 17');

7. Electric Lectern as at points from 1 to 6, including:
m. Some devices ensuring the operator's safety during the reading and during the instrument's functioning;
(m1) These devices consist in 2 photocells (1, 1') placed in the lower part of the instrument, which are connected to the electric control board of the controller with programming logic; these photocells, if working, can stop the movable inclined plane's movement (12);
(m2) Furthermore the controller with programming logic can immediately stop the movable inclined plane in case of a sudden power cut during the instrument's functioning.

## Patentansprüche

1. Elektrisches Lesepult für das Lesen, bestehend aus:
a) Ein äußerer fixierter Rahmen (Bild 2)
b) Eine bewegliche schiefe Ebene (b.s.E. 12), die geeignet ist, ein auf der einstellbaren Ablagefläche (5) liegendes Buch oder Dokument durch gewisse Stützungen zu tragen, damit das Buch gelesen werden kann; diese schiefe Ebene ist an den äußeren fixierten Rahmen (Bild 2) durch zwei Seitenführungen (19, 19', Bild 9) angeschlossen, in denen sie wesentlich vertikal rutschen kann, so daß das Dokument senkrecht zu der Leserichtung verlegt wird.
c) Eine Laserlichtquelle (52, Bild 7), die einen Lichtstrahl oder einen unbeweglichen (52') oder beweglichen (52") Lichtpunkt auf die Vorderseite des Dokuments werfen soll;
(c1) Wenn der Operator die Tastatur (10) in Gang setzt, wird der unbeweglicher Lichtpunkt beweglich, und verschiebt sich waagerecht und senkrecht zu der Bewegung der schiefen Ebene (12), so daß er den Lesezeilen des Dokuments folgt.
(c2) Diese Laserlichtquelle steht in einem Behälter, der durch einige mechanische Elemente mit dem äußeren fixierten Rahmen verbunden ist; solche Elemente erlauben dem Operator, sowohl den Abstand zwischen dem Behälter und der beweglichen schiefen Ebene wie auch die Neigung des Behälters einzustellen. Auf diese Weise kann er während der Programmierungsphase den Lichtstrahl direkt auf die erste Zeile des Dokuments lenken.
d) Eine programmierbare Kontrolleinrichtung und ein Schalttafel bestehend aus einer Tastatur (10) mit Tasten, Schaltknöpfen, Potentiometern und LED Anzeigegeräten, welche die Bewegungen der beweglichen schiefen Ebene (12) und des beweglichen Lichtpunkts (52") steuern sollen, damit die beiden synchronisiert sind, und so daß der bewegliche Lichtpunkt den Textzeilen folgen kann, welche vorher unter allen Lesespalten der rechten oder linken Seite des Dokuments aussortiert worden waren.

2. Elektrisches Lesepult für das Lesen wie lt. Punkt 1, mit einer programmierbaren Kontrolleinrichtung, einem Schalttafel oder Tastatur (10), bestehend aus:
e) Geeigneten Einrichtungen für die automatische, halbautomatische oder manuelle Steuerung der verschiedenen Laufgeschwindigkeiten der beweglichen schiefen Ebene (12) und/oder des beweglichen Lichtpunkts (52") zu den Lesezeilen des Dokuments, so daß jeder Leser das Gerät mit der Geschwindigkeit verwenden kann, welche ihm am besten passt.

3. Elektrisches Lesepult für das Lesen wie lt. Punkt 1 und 2, mit einer programmierbaren Kontrolleinrichtung, einem Schalttafel oder Tastatur (10), bestehend aus:
f) Geeigneten Einrichtungen für die Steuerung der Stellen, wo das Lauf der beweglichen schiefen Ebene (12) starten und enden soll, und - dazu als Option- einigen Einrichtungen für die Steuerung der vertikalen Verschiebung von oben nach unten des beweglichen Lichtpunkts (52")

4. Elektrisches Lesepult für das Lesen wie lt. Punkt 3, mit einer programmierbaren Kontrolleinrichtung, einem Schalttafel oder Tastatur (10), bestehend aus:
(f1) Geeigneten Einrichtungen, um vor dem Lesen in dem Dokument gewisse Spalten auszusortieren, denen der bewegliche Lichtpunkt (52") folgen soll;
(f2) Geeigneten Einrichtungen für die Steuerung des waagerechten Laufs des beweglichen Lichtpunkts (52") von rechts nach links und umgekehrt, indem man die wirkliche Länge der Zeile im Dokument berücksichtigt.

5. Elektrisches Lesepult für das Lesen wie lt. Punkt von 1 zu 4, mit einer programmierbaren Kontrolleinrichtung, einem Schalttafel oder Tastatur (10), bestehend aus:
g) Geeigneten Steuerungen auf der Tastatur (Bild 10), welche erlauben, zwischen zwei verschiedenen Funktionsweisen der schiefen Ebene (12) auszuwählen:
(g1) eine kontinuierliche Fuktionsweise, wo die bewegliche schiefe Ebene (12) sich mit einer linearen Geschwindigkeit bewegt;
(g2) eine taktierte Fuktionsweise, wo die bewegliche schiefe Ebene (12) sich mit einer intermittierenden Geschwindigkeit bewegt;

6. Elektrisches Lesepult für das Lesen wie lt. Punkt von 1 zu 5, bestehend aus:
h) Eine Vorrichtung, welche das Buch an die waagerechte einstellbare Stützfläche der schiefen Ebene befestigt; solche Befestigungsvorrichtungen bestehen aus:
(h1) einem Drehknopf (4, Bild 11), der die Bewegung der Stützfläche der schiefen Ebene (5, Bild 11, Bild 4) einstellt, je nach der Größe oder den Dimensionen des Buches zu lesen;
(h2) einem flexiblen röhrenförmigen drehenden Hebel (9), der durch 2 Seitenachsen rechts und links mit einigen Elementen (7, 7') an die Stützfläche der schiefen Ebene angeschlossen ist, und da kann sich der o.g. Hebel drehen und das Buch befestigen (Bild 4, Bild 12, Bild 13);
(h3) einigen kleinen Schraubenhebeln (16, 16'), die vertikal in ihre eigene Stellungen rutschen und welche -je nach der Größe des Buches - den rechten und linken Bucheinband an die rechte und linke Seite des Pults (13, 13') befestigen.
i) Geeigneten Vorrichtungen, die die Seiten des Buches fest während des Lesens auf der vertikalen Stützfläche der schiefen Ebene halten sollen; solche Vorrichtungen bestehen aus:
(i1) zwei fadenförmigen Stäben rechts und links (11, 11'), die der Länge nach und/oder mit einer Drehbewegung eingestellt werden können; aus solchen Stäben - durch die Drehbewegung des röhrenförmigen Hebels - entsteht ein leichter Druck, der dann erlaubt, die Seiten des Dokuments während des Lesens zu befestigen und fest zu halten (Bild 4, 12, 13);
l) Geeigneten Vorrichtungen, um die symmetrische Stellung der rechten und linken Seiten des Buches auf der schiefen Ebene einzustellen; solche Reihung versichert den linearen Lauf des beweglichen Lichtpunkts (52") auf die Zeilen des Dokuments während des Lesens ohne Interferenzen; diese Vorrichtungen bestehen aus:
(l1) zwei Platten, rechts und links (13, 13'), die durch 2 Hebel einstellbar sind (17, 17');

7. Elektrisches Lesepult für das Lesen wie lt. Punkt von 1 zu 5, bestehend aus:
m) Geeigneten Einrichtungen, welche die Sicherheit des Mitarbeiters während des Lesens und des Fuktionierens des Geräts gewährleisten;
(m1) solche Einrichtungen bestehen aus zwei Fotozellen (1, 1'), welche in dem unteren Teil des Geräts stehen, und die mit dem Schalttafel der programmierbaren Kontrolleinrichtung verbunden sind; solche Fotozellen -wenn aktiviert- können (wenn nötig) die Bewegung der beweglichen schiefen Ebene stoppen.
(m2) die programmierbare Kontrolleinrichtung muß dazu auch den sofortige Stillstand der beweglichen schiefen Ebene gewährleisten können, im Falle eines unabsichtlichen Stromausfalls während des Laufens des Geräts.
